# EUROPEAN PATENT APPLICATION

(11) **EP 4 170 939 A1**
(43) Date of publication of application: **26.04.2023**
(21) Application number: 21841989.3
(22) Date of filing: 02.07.2021

(54) **SERVICE PROCESSING METHOD AND APPARATUS, AND DEVICE, AND SYSTEM**

(30) Priority: 15.07.2020 CN 202010679681
(71) Applicant: Huawei Technologies Co., Ltd., Longgang District, Shenzhen, Guangdong 518129 (CN)
(72) Inventor: PENG, Shuping, Shenzhen, Guangdong 518129 (CN); YU, Zhouyi, Shenzhen, Guangdong 518129 (CN)
(74) Representative: Isarpatent
(86) International application number: PCT/CN2021/104122
(87) International publication number: WO 2022/012352

(57) **Abstract**

This application discloses a service processing method. A network device stores a control policy, and the control policy includes a correspondence between application feature information and an execution action. After receiving a service packet carrying the application feature information, the network device determines the corresponding control policy based on the application feature information, and processes the service packet based on the execution action in the determined control policy. In this way, by storing the control policy in the network device, the network device may determine, based on the control policy stored by the network device and for the service packet carrying the application feature information, the execution action used to process the service packet, to implement application-level service processing. Therefore, it is possible to provide a more refined network service for a user, and user experience is improved. In addition, this application further discloses a service processing apparatus, device, and system.

## Description

This application claims priority to Chinese Patent Application No. 202010679681.4, filed with the China National Intellectual Property Administration on July 15, 2020 and entitled "SERVICE PROCESSING METHOD, APPARATUS, DEVICE, AND SYSTEM", which is incorporated herein by reference in its entirety.

### TECHNICAL FIELD

This application relates to the field of communication technologies, and in particular, to a service processing method, apparatus, device, and system.

### BACKGROUND

With development of communication technologies, emerging applications bring convenience to work and life of users. Usually, user equipment is connected to a network device, and the network device performs access control on an application used by a user on the user equipment. For example, in a home broadband scenario, a broadband network gateway (English: Broadband Network Gateway, BNG for short) may control the application. For another example, in a 5th generation mobile network (English: 5th generation mobile network, 5G for short) scenario, a user plane function (English: User Plane Function, UPF for short) entity may control the application. Therefore, a corresponding network service is provided for the user.

The user may have different requirements for different applications. For example, the user may have a high requirement on network performance for an application A (for example, a game), and have a low requirement on network performance for an application B (for example, an email). However, the network device that controls services of the user currently supports only user-level coarse-grained differentiation control. To be specific, the network device can determine the user to which a received service packet belongs and process the service packet based on an execution action in a control policy corresponding to the user, but cannot perform application-level service processing on an application to which the service packet belongs. Consequently, when the user has a requirement on a target function (for example, an acceleration function) for some applications, an operator cannot meet an application-level refined service processing requirement of the user.

### SUMMARY

Embodiments of this application provide a service processing method, apparatus, device, and system. A network device can be aware of a specific application corresponding to a received service packet, and control the received service packet by using a policy corresponding to the application, to meet an application-level service processing requirement of a user. Therefore, a more refined network service is provided for the user, and user experience is improved.

According to a first aspect, a service processing method is provided. The method is applied to a network device, the network device stores a control policy, and the control policy includes a correspondence between application feature information and an execution action. When user equipment sends a service packet, the service packet carries the application feature information, where the application feature information represents a related feature of an application, and the service packet belongs to the application. In this case, after receiving the service packet, the network device may determine the corresponding control policy based on the application feature information in the service packet, and process the service packet based on the execution action in the determined control policy. The application feature information may include an identifier of the application and a service level of the application. In addition, the application feature information may further include an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application. In this way, by storing the control policy in the network device (where the control policy uses the application feature information as a match item and uses the execution action as an action item, and the application only needs to include the application feature information representing the related feature of the application in the service packet when sending the service packet), the network device may determine, based on the control policy stored by the network device and for the service packet, the execution action used to process the service packet, to implement application-level service processing. Therefore, it is possible to provide a more refined network service for the user, and user experience is improved.

In some possible implementations, the control policy on the network device comes from a management server of an operator, in other words, the management server generates the control policy and sends the control policy to the network device, so that the network device performs refined control on the corresponding application based on the control policy.

In an example, in a home broadband scenario, the network device may be a BNG. In this case, that the network device receives the control policy from the management server of the operator may specifically include: The BNG receives the control policy from an authentication, authorization, and accounting (English: Authentication, Authorization, and Accounting, AAA for short) server. If the BNG is a system in which a control plane (English: Control Plane, CP for short) and a user plane (English: User Plane, UP for short) are separated, the system includes a CP device and a UP device. In this case, that the BNG receives the control policy from an AAA server includes: The CP device receives the control policy sent by the AAA server, and sends the control policy to the UP device. The control policy is carried in a remote authentication dial-in user service (English: Remote Authentication Dial-In User Service, RADIUS for short) packet sent by the AAA server, for example, may be carried in an extended type length value (English: Type Length Value, TLV for short) field of the RADIUS packet. In this way, a data basis is provided for implementing a more refined network service in the home broadband scenario, and user experience is improved.

In another example, in a 5G network scenario, the network device may be a user plane function (English: User Plane Function, UPF for short) entity. In this case, that the network device receives the control policy from the management server of the operator may include: The UPF entity receives the control policy from a session management function (English: Session Management Function, SMF for short) entity. That the UPF entity receives the control policy sent by the session management function SMF entity may specifically include: The UPF entity receives the control policy sent by the SMF entity through an N4 interface. In this way, a data basis is provided for implementing a more refined network service in the 5G scenario, and user experience is improved.

In some possible implementations, after receiving the service packet, the network device may directly parse the service packet to obtain the application feature information in the service packet. Alternatively, to save processing resources of the network device, after receiving the service packet, the network device may first determine whether the user sending the service packet has subscribed to a target function of the application. If yes, the network device parses the service packet to obtain the application feature information. Otherwise, the network device does not parse the service packet, and directly processes the service packet in a conventional manner (namely, a processing manner corresponding to a case in which the target function is not subscribed to). A manner in which the network device determines that the user sending the service packet has subscribed to the target function of the application may, for example, include: The network device determines, based on a source media access control (English: Media Access Control, MAC for short) address of the user, a virtual local area network (English: Virtual Local Area Network, VLAN for short) identifier, and an access interface, the user sending the service packet, and therefore determine, based on the application feature information in the service packet, the target function that is of the application and that is subscribed to by the user.

The target function includes but is not limited to one or more of the following functions: application acceleration, game equipment upgrade, or automatic renewal.

The execution action includes at least one of the following actions: access management, forwarding, QoS guarantee, authentication, authorization, or accounting. The access management is used to perform access control on the user. When the application feature information carried in the service packet received by the network device matches no application feature information in any control policy in the network device, or the application feature information carried in the service packet received by the network device does not include the access management execution action in the corresponding control policy in the network device, the network device may discard the service packet, to prevent the user from accessing a network.

In some possible implementations, when it is determined that the execution action used to process the service packet includes forwarding, this embodiment of this application may further include: The network device receives path information of a forwarding path, where the path information of the forwarding path includes an internet protocol (English: Internet Protocol, IP for short) address and a segment identifier list. In this case, when determining that a destination IP of the service packet matches the IP address included in the path information of the forwarding path, the network device adds the segment identifier list to the service packet, and forwards the service packet based on the segment identifier list. In this way, forwarding of the service packet in the network can meet the allocated service level, so that an application-level service is provided for the user.

According to a second aspect, a service processing method is further provided. The method is applied to a management server. The management server may generate corresponding application feature information for an application, where the application feature information includes an identifier of the application and an allocated service level, and the allocated service level meets a service level requirement of the application. Based on this, the management server can generate a control policy based on the application feature information, where the control policy includes a correspondence between the application feature information and an execution action. In this way, more refined application-level information configuration is implemented. Therefore, a data basis is provided for subsequent application-level service control, provision of a high-quality network service for the application is ensured, and user experience is improved.

In some possible implementations, this embodiment of this application may further include: The management server sends the application feature information to a service server corresponding to the application. In this way, the application feature information may be sent to user equipment through the service server, and this provides a prerequisite for the user equipment to send a service packet carrying the application feature information.

In an example, a process in which the management server generates the application feature information may specifically include: The service server sends a request packet to the management server, where the request packet includes the identifier and the service level requirement of the application. Then, the management server allocates a service level that meets the service level requirement to the application corresponding to the identifier of the application. Therefore, the management server generates the application feature information based on the allocated service level. It can be learned that, in this example, the management server allocates a specific service level to the application, to generate the corresponding application feature information.

In another example, a process in which the management server generates the application feature information may specifically include: The service server sends a request packet to the management server, where the request packet includes the identifier of the application and a specified service level. Then, the management server allocates the specified service level to the application corresponding to the identifier of the application. Therefore, the management server generates the application feature information based on the specified service level. It can be learned that, in this example, the service server specifies a specific service level for the application, and the management server performs confirmation and generates the corresponding application feature information.

The application feature information may further include an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application.

In some other possible implementations, this embodiment of this application may further include: The management server sends the control policy to a network device. In an example, the management server is an authentication, authorization, and accounting AAA server, and that the management server sends the control policy to a network device may, for example, include: The AAA server sends the control policy to a broadband network gateway BNG. The control policy may be specifically carried in a remote authentication dial-in user service RADIUS packet sent by the AAA server. In another example, the management server is a session management function SMF entity, and that the management server sends the control policy to a network device may, for example, include: The SMF entity sends the control policy to a user plane function UPF entity.

The execution action in the control policy includes at least one of the following actions: access management, forwarding, QoS guarantee, authentication, authorization, or accounting.

According to a third aspect, a service processing method is further provided. The method is applied to a service server. The service server may send a request packet to a management server, where the request packet includes an identifier and a service level requirement of an application, and is used to request the management server to generate corresponding application feature information for the application. When generating the corresponding application feature information for the application, the management server sends the application feature information to the service server, where an allocated service level in the application feature information received by the service server meets the service level requirement. In this way, more refined application-level information configuration is implemented. Therefore, a data basis is provided for subsequent application-level service control, provision of a high-quality network service for the application is ensured, and user experience is improved.

The service level requirement may be a specified service level, and the specified service level is the same as the allocated service level. Alternatively, the service level requirement may be a range or requirement of service levels, provided that the allocated service level meets the service level requirement.

In an example, this embodiment of this application may further include: The service server receives a registration packet sent by user equipment to which the application belongs. In this case, that the service server sends the request packet to the management server may be specifically: The service server sends the request packet to the management server in response to receiving the registration packet sent by the user equipment to which the application belongs.

In another example, in this embodiment of this application, after the service server receives the application feature information sent by the management server, the method may further include: The service server receives a registration packet sent by user equipment to which the application belongs.

In this embodiment of this application, the method may further include: The service server sends the application feature information to the user equipment to which the application belongs. Based on the foregoing two examples, that the service server sends the application feature information to the user equipment to which the application belongs may be, for example, that the service server sends a response packet of the request packet to the user equipment to which the application belongs, where the response packet carries the application feature information.

The application feature information may further include an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application.

According to a fourth aspect, a service processing method is further provided. The method is applied to user equipment. The user equipment may send a registration packet to a service server, and the service server provides a service for an application on the user equipment. In this case, the service server may include application feature information in a response packet of the registration packet and return the response packet to the user equipment. The application feature information received by the user equipment includes but is not limited to an identifier of the application and an allocated service level. In this way, it is ensured that the user equipment can include the application feature information in a service packet for sending, so that in a network, more refined processing can be performed on the service packet based on the application feature information in the service packet, and therefore user experience can be improved.

The application feature information may further include an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application.

In some possible implementations, this embodiment of this application may further include: The user equipment sends the service packet to a network device, where the service packet carries the application feature information, and the service packet belongs to the application. In this way, application-level service processing is implemented, provision of a high-quality network service for the application is ensured, and user experience is improved.

According to a fifth aspect, a service processing method is further provided. The method is applied to a controller. The controller may obtain application feature information of an application, where the application feature information includes an identifier and a service level of the application. Therefore, the controller determines, based on the application feature information, a forwarding path corresponding to the application. Then, the controller sends a correspondence between the application feature information and path information of the forwarding path to an ingress node of the forwarding path. It can be learned that, the forwarding path of a service packet sent by the application is determined by obtaining the application feature information corresponding to the application, and the correspondence between the application feature information and the path information of the forwarding path is delivered to the ingress node of the forwarding path, to implement more refined application-level information configuration. Therefore, application-level service packet forwarding can be subsequently performed based on refined configuration information. Forwarding the service packet on the path corresponding to the path information ensures that a requirement of the allocated service level corresponding to the application is met, and user experience is improved.

In some possible implementations, this embodiment of this application may further include: The controller determines at least one candidate path based on location information of an area served by the application or an IP address of user equipment to which the application belongs. In this case, that the controller determines, based on the application feature information, a forwarding path corresponding to the application may, for example, include: The controller determines the forwarding path in the at least one candidate path based on the application feature information, where the forwarding path meets the allocated service level in the application feature information.

The application feature information may further include an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application.

In an example, the controller may send the correspondence between the application feature information and the path information of the forwarding path to the ingress node of the forwarding path in the following manners: Manner 1: The controller sends the correspondence to the ingress node of the forwarding path by using a YANG (English: Yet Another Next Generation) model packet. Manner 2: The controller sends the correspondence to the ingress node of the forwarding path by using a border gateway protocol (English: Border Gateway Protocol, BGP for short) packet or a path computation element protocol (English: Path Computation Element Protocol, PCEP for shot) packet. Manner 3: A technical person manually configures, on the ingress node of the forwarding path by configuring a command line, the correspondence between the application feature information and the path information of the forwarding path in the ingress node of the forwarding path.

In some possible implementations, that the controller determines, based on the application feature information, a forwarding path corresponding to the application may, for example, include: The controller determines, based on the application feature information, a first forwarding path and a second forwarding path that correspond to the application, where all or a part of nodes in the first forwarding path and the second forwarding path are the same, and directions of the first forwarding path and the second forwarding path are opposite. In this case, that the controller sends a correspondence between the application feature information and path information of the forwarding path to an ingress node of the forwarding path may include: The controller sends a correspondence between the application feature information and first path information of the first forwarding path to an ingress node of the first forwarding path. The controller sends a correspondence between the application feature information and second path information of the second forwarding path to an ingress node of the second forwarding path.

A type of the forwarding path determined by the controller includes but is not limited to at least one of the following: a segment routing-internet protocol version 6 (English: Segment Routing-Internet Protocol Version 6, SRv6 for short) tunnel, a segment routing-multi-protocol label switching (English: Segment Routing-Multi-Protocol Label Switching, SR-MPLS for short) tunnel, a deterministic latency path, or a service chain.

It should be noted that, if the controller and a management server are jointly disposed in one physical device, the physical device may perform the method provided in the first aspect and the method provided in the fifth aspect. If the controller and the management server belong to two physical devices, the controller may also perform the method provided in the first aspect. In this case, that the controller obtains the application feature information of the application may, for example, include: The controller determines the application feature information in response to a request of a service server. Alternatively, the management server performs the method provided in the first aspect. In this case, that the controller obtains the application feature information of the application may, for example, include: The controller receives the application feature information from the management server or a service server.

In an example, that the controller determines, based on the application feature information, a forwarding path corresponding to the application may, for example, include: The controller determines, based on the allocated service level, the forwarding path corresponding to the application. In this case, forwarding the service packet on the forwarding path enables network performance to meet the allocated service level.

According to a sixth aspect, a service processing system is further provided. The service processing system may include a management server, a service server, and a network device. The service server is configured to send a request packet to the management server, where the request packet includes an identifier and a service level requirement of an application. The management server is configured to: receive the request packet sent by an application server, allocate a service level that meets the service level requirement to the application corresponding to the identifier of the application, generate application feature information, and send the application feature information to the service server, where the application feature information includes the identifier of the application and the allocated service level. The service server is further configured to send the application feature information to user equipment. The management server is further configured to: generate a control policy based on the application feature information, and send the control policy to the network device, where the control policy includes a correspondence between the application feature information and an execution action. The network device is configured to: receive the control policy sent by the management server, receive a service packet sent by the user equipment, and process the service packet based on the execution action in the control policy, where the service packet includes the application feature information.

A service level corresponding to the service level requirement is the same as the allocated service level.

In an example, the request packet includes location information. In this case, the management server is further configured to: establish, based on the location information, a forwarding path from a service area corresponding to the location information to the service server, where the forwarding path meets a requirement of the allocated service level; and send a forwarding policy to an ingress node of the forwarding path, where the forwarding policy includes path information corresponding to the forwarding path.

In an example, the service server is further configured to send the request packet to the management server after receiving a registration packet sent by a user. The registration packet includes an IP address of the user equipment, and the request packet includes the IP address of the user equipment. In this case, the management server is further configured to establish, based on the IP address of the user equipment, a forwarding path from the network device accessed by the user equipment to the service server, where the forwarding path meets the requirement of the allocated service level.

According to a seventh aspect, a service processing apparatus is further provided. The apparatus is used in a network device, and the apparatus includes a first receiving unit, a first determining unit, and a processing unit. The first receiving unit is configured to receive a service packet, where the service packet carries application feature information, the application feature information represents a related feature of an application, and the service packet belongs to the application. The first determining unit is configured to determine a control policy based on the application feature information, where the control policy includes a correspondence between the application feature information and an execution action. The processing unit is configured to process the service packet based on the execution action.

The application feature information includes an identifier of the application and a service level of the application.

The application feature information further includes an identifier of a user to which the application belongs and/or a flow identifier of the application.

In an example, the apparatus further includes a second receiving unit. The second receiving unit is configured to receive the control policy from a management server of an operator.

In a possible implementation, the network device is a broadband network gateway BNG, and the second receiving unit is specifically configured to receive the control policy from an authentication, authorization, and accounting AAA server.

In an example, the BNG is a system in which a control plane CP and a user plane UP are separated, the system includes a CP device and a UP device, and the second receiving unit includes a receiving subunit and a sending subunit. The receiving subunit is configured to receive the control policy sent by the AAA server, and the sending subunit is configured to send the control policy to the UP device.

The control policy is carried in a remote authentication dial-in user service RADIUS packet sent by the AAA server.

In another possible implementation, the network device is a user plane function UPF entity, and the second receiving unit is specifically configured to receive the control policy from a session management function SMF entity.

In an example, the second receiving unit is specifically configured to receive the control policy sent by the SMF entity through an N4 interface.

In a possible implementation, the apparatus further includes a second determining unit. The second determining unit is configured to: before the control policy is determined based on the application feature information, determine that the user sending the service packet has subscribed to a target function of the application. In an example, the second determining unit is specifically configured to: determine, based on a source media access control MAC address of the user, a virtual local area network VLAN identifier, and an access interface, the user sending the service packet; and determine, based on the application feature information in the service packet, the target function that is of the application and that is subscribed to by the user.

The target function includes one or more of the following functions: application acceleration, game equipment upgrade, or automatic renewal.

The execution action includes at least one of the following actions: access management, forwarding, QoS guarantee, authentication, authorization, or accounting.

In another possible implementation, the apparatus further includes a third receiving unit and a forwarding unit. The third receiving unit is configured to receive path information of a forwarding path, where the path information of the forwarding path includes an internet protocol IP address and a segment identifier list. The forwarding unit is configured to: when it is determined that a destination IP of the service packet matches the IP address included in the path information of the forwarding path, add the segment identifier list to the service packet, and forward the service packet based on the segment identifier list.

It should be noted that the service processing apparatus provided in the seventh aspect corresponds to the method provided in the first aspect. For specific implementations and achieved effects, refer to related descriptions of the method shown in the first aspect.

According to an eighth aspect, a service processing apparatus is further provided. The apparatus is used in a management server, and the apparatus includes a first generation unit and a second generation unit. The first generation unit is configured to generate corresponding application feature information for an application, where the application feature information includes an identifier of the application and an allocated service level, and the allocated service level meets a service level requirement of the application. The second generation unit is configured to generate a control policy based on the application feature information, where the control policy includes a correspondence between the application feature information and an execution action.

In a possible implementation, the apparatus further includes a first sending unit. The first sending unit is configured to send the application feature information to a service server corresponding to the application.

In a possible implementation, the apparatus further includes a first receiving unit and a first allocation unit. The first receiving unit is configured to: before the corresponding application feature information is generated for the application, receive a request packet sent by the service server, where the request packet includes the identifier and the service level requirement of the application. The first allocation unit is configured to allocate a service level that meets the service level requirement to the application corresponding to the identifier of the application.

In another possible implementation, the apparatus further includes a second receiving unit and a second allocation unit. The second receiving unit is configured to: before the corresponding application feature information is generated for the application, receive a request packet sent by the service server, where the request packet includes the identifier of the application and a specified service level. The second allocation unit is configured to allocate the specified service level to the application corresponding to the identifier of the application.

The application feature information further includes an identifier of a user to which the application belongs and/or a flow identifier of the application.

In a possible implementation, the apparatus further includes a second sending unit. The second sending unit is configured to send the control policy to a network device.

In an example, the management server is an authentication, authorization, and accounting AAA server, and the second sending unit is specifically configured to send the control policy to a broadband network gateway BNG. The control policy is carried in a remote authentication dial-in user service RADIUS packet sent by the AAA server.

In another example, the management server is a session management function SMF entity, and the second sending unit is specifically configured to send the control policy to a user plane function UPF entity.

The execution action includes at least one of the following actions: access management, forwarding, QoS guarantee, authentication, authorization, or accounting.

It should be noted that the service processing apparatus provided in the eighth aspect corresponds to the method provided in the second aspect. For specific implementations and achieved effects, refer to related descriptions of the method shown in the second aspect.

According to a ninth aspect, a service processing apparatus is further provided. The apparatus is used in a service server, and the apparatus includes a first sending unit and a first receiving unit. The first sending unit is configured to send a request packet to a management server, where the request packet includes an identifier and a service level requirement of an application. The first receiving unit is configured to receive application feature information sent by the management server, where the application feature information includes the identifier of the application and an allocated service level, and the allocated service level meets the service level requirement.

The service level requirement is a specified service level, and the specified service level is the same as the allocated service level.

In a possible implementation, the apparatus further includes a second receiving unit. The second receiving unit is configured to receive a registration packet sent by user equipment to which the application belongs.

In an example, the sending unit is specifically configured to send the request packet to the management server in response to receiving the registration packet sent by the user equipment to which the application belongs.

In another example, the apparatus further includes a third receiving unit. The third receiving unit is configured to: after the application feature information sent by the management server is received, receive a registration packet sent by user equipment to which the application belongs.

In another example, the apparatus further includes a second sending unit. The second sending unit is configured to send the application feature information to the user equipment to which the application belongs.

The application feature information further includes an identifier of a user to which the application belongs and/or a flow identifier of the application.

It should be noted that the service processing apparatus provided in the ninth aspect corresponds to the method provided in the third aspect. For specific implementations and achieved effects, refer to related descriptions of the method shown in the third aspect.

According to a tenth aspect, a service processing apparatus is further provided. The apparatus is used in user equipment, and the apparatus includes a first sending unit and a receiving unit. The first sending unit is configured to send a registration packet to a service server, where the service server provides a service for an application on the user equipment. The receiving unit is configured to receive a response packet that is of the registration packet and that is sent by the service server, where the response packet carries application feature information, and the application feature information includes an identifier of the application and an allocated service level.

The application feature information further includes an identifier of a user to which the application belongs and/or a flow identifier of the application.

In a possible implementation, the apparatus further includes a second sending unit. The second sending unit is configured to send a service packet to a network device, where the service packet carries the application feature information, and the service packet belongs to the application.

It should be noted that the service processing apparatus provided in the tenth aspect corresponds to the method provided in the fourth aspect. For specific implementations and achieved effects, refer to related descriptions of the method shown in the fourth aspect.

According to an eleventh aspect, a service processing apparatus is further provided. The apparatus is used in a controller, and the apparatus includes an obtaining unit, a first determining unit, and a sending unit. The obtaining unit is configured to obtain application feature information of an application, where the application feature information includes an identifier and a service level of the application. The first determining unit is configured to determine, based on the application feature information, a forwarding path corresponding to the application. The sending unit is configured to send a correspondence between the application feature information and path information of the forwarding path to an ingress node of the forwarding path.

In a possible implementation, the apparatus further includes a second determining unit. The second determining unit is configured to determine at least one candidate path based on location information of an area served by the application or an IP address of user equipment to which the application belongs. In this case, the first determining unit is specifically configured to determine the forwarding path in the at least one candidate path based on the application feature information, where the forwarding path meets the allocated service level in the application feature information.

The application feature information further includes an identifier of a user to which the application belongs and/or a flow identifier of the application.

In an example, the sending unit is specifically configured to: send the correspondence to the ingress node of the forwarding path by using a YANG model packet; or send the correspondence to the ingress node of the forwarding path by using a border gateway protocol BGP packet or a path computation element protocol PCEP packet.

In another example, the first determining unit is specifically configured to determine, based on the application feature information, a first forwarding path and a second forwarding path that correspond to the application, where directions of the first forwarding path and the second forwarding path are opposite. In this case, the sending unit is specifically configured to send a correspondence between the application feature information and first path information of the first forwarding path to an ingress node of the first forwarding path.

A type of the forwarding path includes at least one of the following: a segment routing-internet protocol version 6 SRv6 tunnel, a segment routing-multi-protocol label switching SR-MPLS tunnel, a deterministic latency path, or a service chain.

In an example, the obtaining unit is specifically configured to: receive the application feature information from a management server or a service server; or determine the application feature information in response to a request of a service server.

In another possible implementation, the first determining unit is specifically configured to determine, based on the allocated service level, the forwarding path corresponding to the application.

It should be noted that the service processing apparatus provided in the eleventh aspect corresponds to the method provided in the fifth aspect. For specific implementations and achieved effects, refer to related descriptions of the method shown in the fifth aspect.

According to a twelfth aspect, this application further provides a network device, including a memory and a processor. The memory is configured to store a computer program or instructions, and the processor is configured to invoke the computer program or the instructions stored in the memory, so that the network device is enabled to perform the method provided in the first aspect.

According to a thirteenth aspect, this application further provides a management server, including a memory and a processor. The memory is configured to store a computer program or instructions, and the processor is configured to invoke the computer program or the instructions stored in the memory, so that the management server is enabled to perform the method provided in the second aspect.

According to a fourteenth aspect, this application further provides a service server, including a memory and a processor. The memory is configured to store a computer program or instructions, and the processor is configured to invoke the computer program or the instructions stored in the memory, so that the service server is enabled to perform the method provided in the third aspect.

According to a fifteenth aspect, this application further provides user equipment, including a memory and a processor. The memory is configured to store a computer program or instructions, and the processor is configured to invoke the computer program or the instructions stored in the memory, so that the user equipment is enabled to perform the method provided in the fourth aspect.

According to a sixteenth aspect, this application further provides a controller, including a memory and a processor. The memory is configured to store a computer program or instructions, and the processor is configured to invoke the computer program or the instructions stored in the memory, so that the controller is enabled to perform the method provided in the fifth aspect.

According to a seventeenth aspect, this application further provides a computer-readable storage medium. The computer-readable storage medium stores instructions. When the instructions are run on a computer, the computer is enabled to perform the method provided in any embodiment of the first aspect to the fifth aspect.

According to an eighteenth aspect, this application further provides a computer program product. The computer program product includes a computer program or computer-readable instructions. When the computer program or the computer-readable instructions are run on a computer, the computer is enabled to perform the method provided in any embodiment of the first aspect to the fifth aspect.

According to a nineteenth aspect, this application further provides a communication system. The communication system includes the service processing apparatuses provided in the seventh aspect to the eleventh aspect, or the communication system includes the devices provided in the twelfth aspect to the sixteenth aspect.

### BRIEF DESCRIPTION OF DRAWINGS

FIG. 1 is a schematic diagram of a format of application feature information according to an embodiment of this application;
FIG. 2 is a schematic diagram of a structure of a service processing system 100 according to an embodiment of this application;
FIG. 3 is a schematic diagram of a structure of a service processing system 100 in a home broadband scenario according to an embodiment of this application;
FIG. 4 is a schematic diagram of a structure of a service processing system 100 in a 5G mobile communication scenario according to an embodiment of this application;
FIG. 5A and FIG. 5B are a signaling flowchart of a service processing method 100 according to an embodiment of this application;
FIG. 6a is a signaling flowchart of a process of obtaining application feature information according to an embodiment of this application;
FIG. 6b is a signaling flowchart of another process of obtaining application feature information according to an embodiment of this application;
FIG. 7 is a schematic diagram of a format of a RADIUS packet according to an embodiment of this application;
FIG. 8a is a schematic diagram of a structure of a network in which an ingress node is distributed according to an embodiment of this application;
FIG. 8b is a schematic diagram of a structure of another network in which an ingress node is distributed according to an embodiment of this application;
FIG. 8c is a schematic diagram of a structure of still another network in which an ingress node is distributed according to an embodiment of this application;
FIG. 8d is a schematic diagram of a structure of yet another network in which an ingress node is distributed according to an embodiment of this application;
FIG. 8e is a schematic diagram of a structure of still yet another network in which an ingress node is distributed according to an embodiment of this application;
FIG. 9 is a schematic diagram of a structure of a service processing system 900 according to an embodiment of this application;
FIG. 10 is a schematic diagram of a structure of a service processing apparatus 1000 according to an embodiment of this application;
FIG. 11 is a schematic diagram of a structure of a service processing apparatus 1100 according to an embodiment of this application;
FIG. 12 is a schematic diagram of a structure of a service processing apparatus 1200 according to an embodiment of this application;
FIG. 13 is a schematic diagram of a structure of a service processing apparatus 1300 according to an embodiment of this application;
FIG. 14 is a schematic diagram of a structure of a service processing apparatus 1400 according to an embodiment of this application;
FIG. 15 is a schematic diagram of a structure of a network device 1500 according to an embodiment of this application;
FIG. 16 is a schematic diagram of a structure of a management server 1600 according to an embodiment of this application;
FIG. 17 is a schematic diagram of a structure of a service server 1700 according to an embodiment of this application;
FIG. 18 is a schematic diagram of a structure of user equipment 1800 according to an embodiment of this application;
FIG. 19 is a schematic diagram of a structure of a controller 1900 according to an embodiment of this application; and
FIG. 20 is a schematic diagram of a structure of a communication system 2000 according to an embodiment of this application.

### DETAILED DESCRIPTION OF EMBODIMENTS

The following describes technical solutions in embodiments of this application with reference to accompanying drawings. A network architecture and a service scenario described in embodiments of this application are intended to describe the technical solutions in embodiments of this application more clearly, and do not constitute a limitation on the technical solutions provided in embodiments of this application. Persons of ordinary skill in the art may know: With evolution of the network architecture and emergence of new service scenarios, the technical solutions provided in embodiments of this application are also applicable to similar technical problems.

Ordinal numbers such as "1", "2", "3", "first", "second", and "third" in this application are used to distinguish between a plurality of objects, but are not intended to limit a sequence of the plurality of objects.

It should be understood that "A and/or B" mentioned in this application includes the following cases: Only A is included, only B is included, or both A and B are included.

Currently, a network device may perform user-level or application-type-level service control on service packets. To be specific, a user uses any application, and the network device can be aware of, based on different received service packets, the user (or an application type) to which these service packets belong, and therefore process the service packets by using a control policy corresponding to the user (or the application type). The control policy is a manner in which the network device processes the service packet to provide a corresponding network service. A current control policy corresponds to a user (or an application type), and may specifically include but is not limited to a correspondence between an identifier of the user (or the application type) and an execution action. The execution action includes but is not limited to forwarding, authentication, authorization, and accounting. For a control policy corresponding to a user, in one case, an operator may adjust, based on a level of the user and a service purchased by the user, an execution action in the control policy corresponding to the user in the network device; in another case, the network device may adjust, based on a requirement of the user or a network status, an execution action in the control policy corresponding to the user. For control policies corresponding to different application types, the operator may adjust, based on features of the application types, network statuses, and the like, execution actions in the control policies corresponding to the application types. Control policies corresponding to a plurality of users (or application types) may be the same or may be different. For example, for users that do not purchase a target function from the operator, control policies corresponding to these users on the network device may be the same; for a user that purchases the target function from the operator, the network device may adjust, based on the purchased target function, a control policy corresponding to the user. In embodiments of this application, the target function may include but is not limited to: application acceleration, game equipment upgrade, automatic renewal, or the like.

In an example, the network device may create a control policy for each user, and the control policy is specifically a correspondence between a packet feature and an execution action. The packet feature is used to uniquely identify the user, and the packet feature includes a common feature of service packets sent by the user. The packet feature does not vary with different applications corresponding to the service packets. For example, the packet feature includes but is not limited to an internet protocol (English: Internet Protocol, IP for short) address, a media access control (English: Media Access Control, MAC for short) address, a virtual local area network (English: Virtual Local Area Network, VLAN for short) identifier, and an access interface, where the access interface refers to an interface through which the network device receives the service packet. It is assumed that an application 1 of the user sends a service packet 1, and an application 2 of the user sends a service packet 2. Because both the service packet 1 and the service packet 2 belong to a same user, IP addresses of the service packet 1 and the service packet 2 are both an IP address 1, MAC addresses of the service packet 1 and the service packet 2 are both a MAC address 1, VLAN identifiers of the service packet 1 and the service packet 2 are both a VLAN identifier 1, and access interfaces of the service packet 1 and the service packet 2 are both an interface 1. In this case, because packet features of the service packet 1 and the service packet 2 are the same, the network device obtains a same control policy through matching based on the same packet feature, and performs same processing on the service packet 1 and the service packet 2 based on an execution action in the control policy, for example, charges the service packet 1 and the service packet 2 by using a same accounting template. It should be noted that, based on different network scenarios, the VLAN identifier of the foregoing packet feature may be a single VLAN ID, or may be two VLAN identifiers (namely, QinQ (English: 802.1Q-in-802.1Q)).

It can be learned that, in a service processing method currently implemented by the network device, different control policies are set to provide corresponding network services for different users or different application types. However, the network device cannot implement finer-grained service processing. For example, when a user has a target function (for example, acceleration function) requirement for one or more used applications, the network device cannot implement a targeted execution action for a specific application based on a corresponding control policy. As a result, a network provides poor user experience.

Based on this, embodiments of this application provide a service control method. A network device prestores a control policy. The control policy includes a correspondence between an execution action and application feature information that represents a related feature of an application. When receiving a service packet corresponding to the application, the network device may obtain the application feature information from the service packet, determine the corresponding control policy based on the application feature information, and control the service packet based on the execution action in the control policy. In this way, by storing the control policy in the network device (where the control policy uses the application feature information as a match item and uses the execution action as an action item, and the application only needs to include the application feature information representing the related feature of the application in the service packet when sending the service packet), the network device may determine, based on the control policy stored by the network device and for the service packet, the execution action used to process the service packet, to implement application-level service processing. Therefore, it is possible to provide a more refined network service for a user, and user experience is improved.

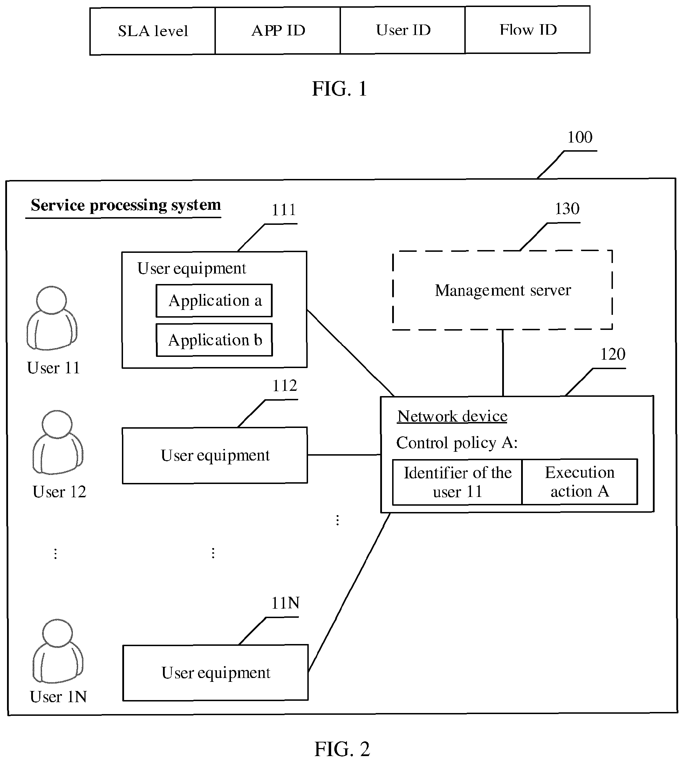

The application feature information (English: Application-aware ID) is used to represent the related feature of the application. For example, the application feature information may include all or a part of the following information: an identifier of the application (English: Application Identity, APP ID for short), an identifier of the user (English: User ID), a flow identifier (English: Flow ID) of the application, and a service level. The APP ID is used to uniquely identify the specific application. The application may be an application (for example, Migu) provided by an operator, or may be an application (for example, Arena of Valor) provided by an application provider (English: Over The Top, OTT for short). The user ID is used to identify the user to which the application belongs. The flow ID is used to identify a service flow or session to which the service packet sent by the application belongs. The service level is used to reflect network performance required by the service packet sent by the application, for example, may be a service level agreement (English: Service Level Agreement, SLA for short) level or an SLA value. In embodiments of this application, the application-aware ID may include at least the APP ID and the allocated service level, and may further include the user ID and/or the flow ID based on an actual requirement. In an example, FIG. 1 shows a format of the application feature information. The application feature information may specifically include the SLA level, the APP ID, the user ID, and the flow ID.

The control policy is a general term of processing policies for the service packet received by the network device, and may be specifically the correspondence between the application feature information and the execution action. The execution action includes at least one of the following actions: access management, forwarding, authentication, authorization, or accounting. The authentication, authorization, and accounting may be execution actions allocated by the operator on a management server to the application, and are delivered by the management server to the network device. The network device respectively completes authentication, authorization, and accounting on the application based on the execution actions authentication, authorization, and accounting. The forwarding may be delivered by a controller to an ingress node (for example, the network device) of a forwarding path. If the ingress node of the forwarding path determines that the execution action corresponding to the received service packet includes the forwarding, the ingress node may further query path information of the forwarding path of the service packet, and forward the service packet based on the path information of the forwarding path, to meet a network performance requirement of the application to which the service packet belongs. The access management is used to restrict network access of the user. When the application feature information carried in the service packet received by the network device matches no application feature information in any control policy in the network device, or the application feature information carried in the service packet received by the network device does not include the access management execution action in the corresponding control policy in the network device, the network device may discard the service packet, to prevent the user from accessing a network.

It should be noted that each application may include a plurality of different flows, for example, a video flow and an audio flow. Therefore, the service processing method provided in embodiments of this application may also be used to perform flow-level service processing on the application. In this case, the application feature information includes the flow ID, and the control policy on the network device may correspond to a specific application or may correspond to a flow or several flows on the application. It should be noted that the flow ID included in the application feature information may be some specified or important flow IDs in the application. For example, if the application is a game application, the application feature information may include a flow ID corresponding to an action instruction in the game application. In this way, the network device can be aware of the action instruction and perform corresponding processing on the action instruction. In embodiments of this application, user-level service processing is used as an example for description. An implementation of flow-level service processing of an application is similar to the following implementation of application-level service processing. Details are not described repeatedly in embodiments of this application.

It should be noted that both the management server and the controller are devices of the operator, and may be specifically two physical devices that establish a communication connection relationship, or may be two functional modules in an integrated physical device. For ease of description, the management server and the controller are separately described as two physical devices in embodiments of this application.

For example, embodiments of this application may be applied to a service processing system 100 shown in FIG. 2. FIG. 2 is a schematic diagram of a structure of the service processing system 100. The service processing system 100 may include a network device 120, user equipment 111, user equipment 112, ..., and user equipment 11N (where N is an integer greater than or equal to 1). The user equipment 111 belongs to a user 11, the user equipment 112 belongs to a user 12, ..., and the user equipment 11N belongs to a user 1N. The user equipment 111, the user equipment 112, ..., and the user equipment 11N are all connected to the network device 120. The network device 120 is configured to perform service processing on applications on the N user equipments, to provide network services for the corresponding applications.

The service processing system 100 shown in FIG. 2 is used as an example to describe several common service processing methods used currently.

In an example, the network device 120 may store N groups of control policies, including a control policy A. The control policy A is a correspondence between an IP address 1, a MAC address 1, a VLAN ID 1, an access interface 1, and an execution action A. In this case, after receiving a service packet 1 sent by the user 11 by operating an application a on the user equipment 111, the network device 120 obtains a packet feature 1 of the service packet 1: the IP address 1, the MAC address 1, the VLAN ID 1, and the access interface 1, and determines, in the prestored N groups of control policies based on the packet feature 1, that a control policy corresponding to the service packet 1 is the control policy A. Therefore, the network device 120 processes the service packet 1 based on the execution action A in the control policy A. Alternatively, the network device 120 may also store M groups of control policies, including a control policy A'. The control policy A' is a correspondence between a MAC address 1, a VLAN ID 1, an application type 11, and an execution action A'. In this case, after receiving a service packet 2 sent by the user 11 by operating an application a on the user equipment 111, the network device 120 obtains a packet feature 2 of the service packet 2: the MAC address 1, the VLAN ID 1, and the application type 11, and determines, in the prestored M groups of control policies based on the packet feature 2, that a control policy corresponding to the service packet 2 is the control policy A'. Therefore, the network device 120 processes the service packet 2 based on the execution action A' in the control policy A'. It can be learned that, in the foregoing service processing method, the network device 120 can only be aware of a user from which a received service packet comes or an application type of the received service packet, but cannot be aware of a specific application from which the service packet comes. Consequently, the network device 120 cannot perform more refined service processing for the application of the user.

In another example, it is assumed that the user 11 purchases a target function (or purchases the target function for an application type 11). In this case, an operator may allocate execution actions such as a quality of service (English: Quality of Service, QoS for short) configuration file 1 and an accounting template 1 to the user 11 (or the application type 11) on a management server 130 in the service processing system 100. The management server 130 sends, to the network device 120, a control policy including the execution actions such as the QoS configuration file 1 and the accounting template 1. For example, the control policy includes a correspondence between an identifier of the user 11, the QoS configuration file 1, and the accounting template 1. After receiving a service packet 1 sent by the user 11 by operating an application a on the user equipment 111, the network device 120 may determine that the service packet 1 is from the user 11 (or is of the application type 11). In this case, the network device 120 processes the service packet 1 based on the QoS configuration file 1 and the accounting template 1. It can be learned that, in the service processing method, the network device 120 can be aware of a user from which a received service packet comes (or an application type of the received service packet), and the operator may deliver, for a target function enabled by a user (or enabled for an application type), a control policy corresponding to the target function enabled by the user to the network device, to ensure that all applications of the user (or the application type of the user) are (is) adapted to a QoS configuration file and an accounting template that correspond to the target function, and provide the corresponding target function for the user. However, because the network device cannot be aware of a specific application from which the service packet comes, the operator cannot provide a target function for the specific application. Consequently, the network device cannot implement more refined service processing.

The service processing system 100 shown in FIG. 2 is used as an example to show that the method provided in embodiments of this application can implement more refined service processing.

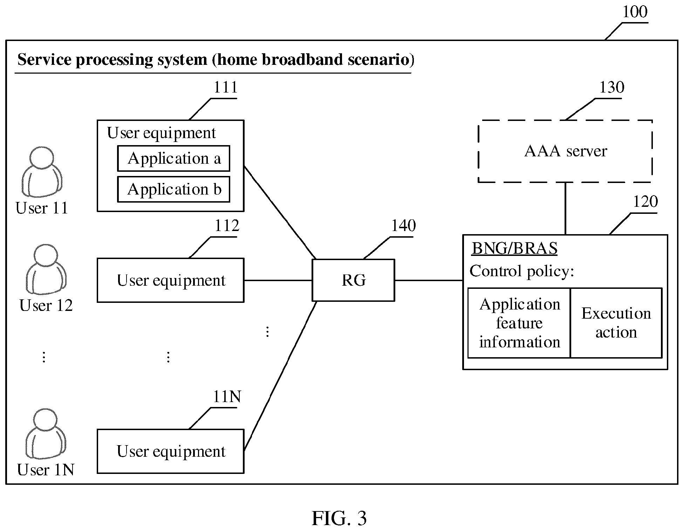

In an example, the service processing system 100 may correspond to a home broadband scenario. As shown in FIG. 3, the network device 120 in the service processing system 100 may be specifically a broadband network gateway (English: Broadband Network Gateway, BNG for short) 120 or a broadband remote access server (English: Broadband Remote Access Server, BRAS for short) 120. The BNG 120 or the BRAS 120 performs corresponding service processing on an application. The user equipment is connected to the BNG 120 or the BRAS 120 through a residential gateway (English: Residential Gateway, RG for short) 140. The management server 130 may be an authentication, authorization, and accounting (English: Authentication, Authorization, and Accounting, AAA for short) server 130. The AAA server 130 sends a control policy corresponding to each application to the BNG 120 or the BRAS 120. The control policy may specifically include a correspondence between application feature information and an execution action.

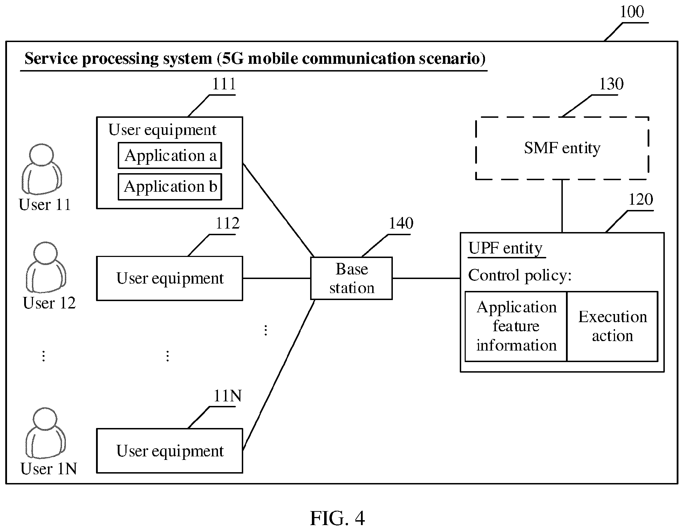

In another example, the service processing system 100 may correspond to a mobile communication scenario, for example, a 5th generation mobile network (English: 5th generation mobile network, 5G for short) scenario shown in FIG. 4. The network device 120 in the service processing system 100 may be specifically a user plane function (English: User Plane Function, UPF for short) entity 120, and the UPF entity 120 performs corresponding service control on an application. The user equipment may be connected to the UPF entity 120 through a base station 140. The management server 130 may be a session management function (English: Session Management Function, SMF for short) entity 130. The SMF entity 130 sends a control policy corresponding to each application to the UPF entity 120. The control policy may specifically include a correspondence between application feature information and an execution action.

It can be learned that, in the scenarios shown in FIG. 3 and FIG. 4, when a user needs to apply to the operator for enabling a target function for one or more applications used by the user, the operator may enable the target function for the specific application, and the network device 120 may obtain application feature information of the application for which the target function is enabled and an execution action corresponding to the application feature information. Therefore, when obtaining a service packet carrying the application feature information, the network device 120 may be aware of the specific application corresponding to the service packet, determine the execution action applicable to the application based on the application feature information carried in the service packet, and process the service packet based on the execution action, to implement application-level refined service control. This meets special requirements of the user for different applications, and improves user experience.

It should be noted that an application in embodiments of this application is specifically an application program installed on user equipment, and a service server corresponding to the application program in a data center provides a corresponding service for the application.

A network device in embodiments of this application may be specifically a BNG, a BRAS, a router, or a switch in a home broadband scenario, or may be a UPF entity in a 5G mobile communication scenario.

It may be understood that the foregoing scenarios are merely examples in embodiments of this application, and embodiments of this application are not limited to these scenarios.

The following describes in detail specific implementations of the service processing method in embodiments of this application with reference to the accompanying drawings by using embodiments.

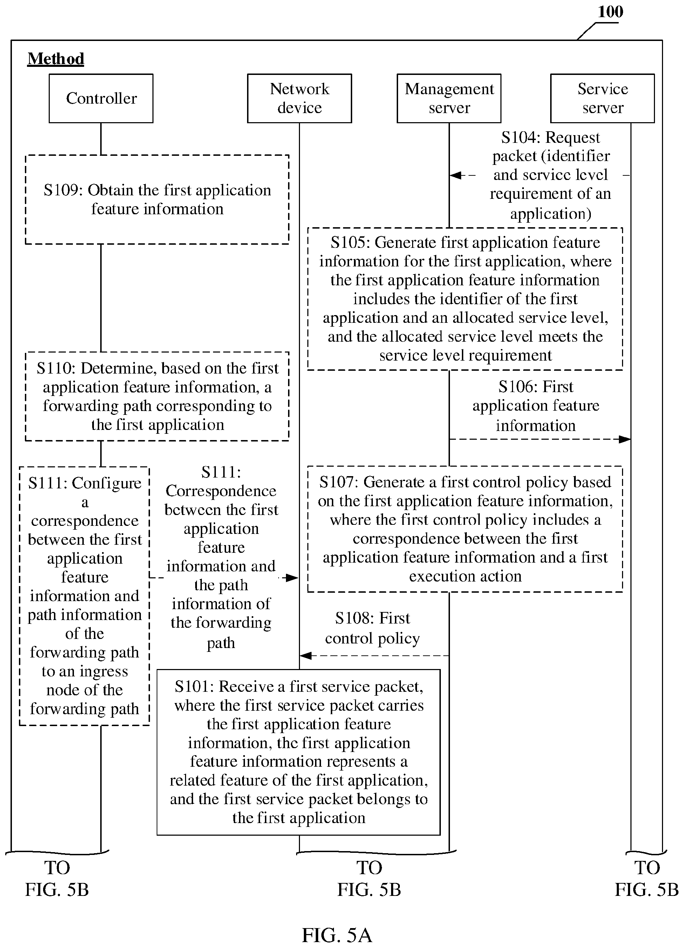

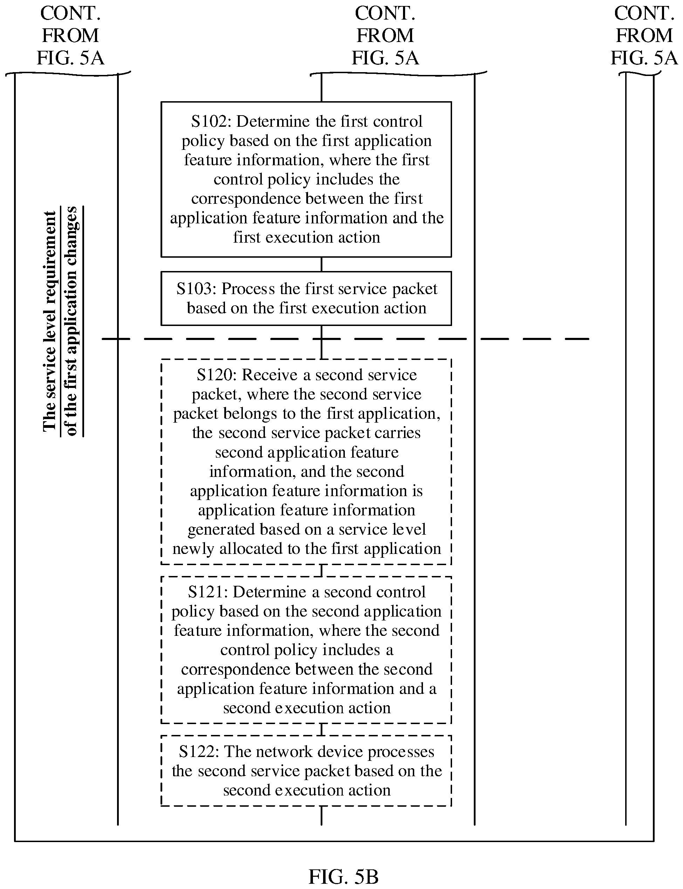

FIG. 5A and FIG. 5B are a schematic flowchart of a packet processing method 100 according to an embodiment of this application. With reference to FIG. 5A and FIG. 5B, a network device in the method 100 may be specifically the network device 120 shown in FIG. 2, or may be the BNG 120 or the BRAS 120 in the scenario shown in FIG. 3, or may be the UPF entity 120 in the scenario shown in FIG. 4. During specific implementation, the method 100 may include, for example, the following S101 to S103.

S101: The network device receives a first service packet, where the first service packet carries first application feature information, the first application feature information represents a related feature of a first application, and the first service packet belongs to the first application.

The first application is any application on which the network device is responsible for service processing. In a case, the first application may be an application provided by an operator, and a service corresponding to the application is provided by an operator server. In another case, the first application may alternatively be an application (namely, an OTT application) provided by an application provider, and a service corresponding to the application is provided by an OTT server. In the following descriptions, the OTT server or the operator server that provides a service for the first application is denoted as a service server, and the service server provides a service for the first application.

The first application feature information represents the related feature of the first application. To enable the network device in a network to effectively be aware of an application corresponding to a service packet and a requirement of the application, so as to meet a targeted network resource scheduling requirement and a targeted SLA performance requirement of the application, the first service packet sent by the first application may carry the first application feature information. Specifically, the first application feature information may include an identifier of the first application to which the first service packet belongs and a service level allocated to the first application. The network device parses the first application feature information in the first service packet, is aware, based on the identifier of the first application in the first application feature information, that the first service packet belongs to the first application, and determines a network performance requirement of the first application based on the allocated service level in the first application feature information. In addition, the first application feature information may further include an identifier of a user to which the first application belongs and/or a flow identifier of a flow to which the first service packet belongs, and is used to notify the network device of the specific user corresponding to the first service packet and the flow to which the first service packet belongs. The flow identifier included in the first application feature information may be some specified or important flow identifiers in the first application. For example, if the first application is a game application, the first application feature information may include a flow identifier corresponding to an action instruction in the game application.

It is assumed that the first service packet is an internet protocol version 6 (English: Internet Protocol Version 6, IPv6 for short) packet. In this case, the first application feature information may be specifically carried in a flow label (English: Flow Label) field of an IPv6 packet header, a hop-by-hop options header (English: Hop-by-Hop Options Header, HBH for short), or a destination options header (English: Destination Options Header, DOH for short). It is assumed that the first service packet is a segment routing-internet protocol version 6 (English: Segment Routing-Internet Protocol Version 6, SRv6 for short) packet. In this case, the first application feature information may be carried in a segment routing header (English: Segment Routing Header, SRH for short) field of the SRv6 packet in addition to the foregoing locations of the IPv6 packet header of the packet. The first application feature information may be specifically carried in an SRH tag (English: Tag) field or an SRH type length value (English: Type Length Value, TLV for short) field in the SRH, or carried in an arguments (English: Arguments, Args for short) field of each segment identifier (English: Segment Identifier, SID for short) in the SRH. The foregoing manner of carrying the first application feature information in the first service packet is merely an example. How to carry the first application feature information in the first service packet is not specifically limited in this embodiment of this application.

During specific implementation, before S101, this embodiment of this application may further include: For the first application whose target function (for example, acceleration) needs to be subscribed to, the service server of the first application needs to negotiate with the operator, to determine whether the target function can be enabled for the first application. When it is determined through negotiation that the target function can be enabled for the first application, in an aspect, a management server (or a controller) of the operator and the service server determine the first application feature information of the first application through negotiation, and the management server (or the controller) sends the determined first application feature information to the network device and the service server. For details, refer to S104 to S108 below and related descriptions. In another aspect, the controller obtains the first application feature information of the first application, determines a corresponding forwarding path for the first application based on the first application feature information, and configures a correspondence between the first application feature information and path information of the forwarding path to an ingress node of the forwarding path. For details, refer to S109 to S111 below and related descriptions.

In some possible implementations, before the first application sends the first service packet, an example in which the management server and the service server determine the first application feature information through negotiation, and the management server determines a first control policy is used, and this embodiment of this application may further include the following S104 to S 108.

S104: The service server sends a request packet to the management server, where the request packet includes the identifier and a service level requirement of the application.

S105: The management server generates the corresponding first application feature information for the first application, where the first application feature information includes the identifier of the first application and the allocated service level, and the allocated service level meets the service level requirement of the first application.

S106: The management server sends the first application feature information to the service server.

S107: The management server generates the first control policy based on the first application feature information, where the first control policy includes a correspondence between the first application feature information and a first execution action.

S108: The management server sends the first control policy to the network device, so that the network device processes a service packet of the first application.

For the first application for which it is determined that the target function can be enabled, the service server and the management server may negotiate the corresponding first application feature information for the first application.

In an example, the first application feature information determined in S 105 may be specifically allocated by the operator to the first application on the management server. S104 to S106 may specifically include: The service server sends a request packet to the management server, where the request packet is used to request the management server to allocate the corresponding application feature information to the first application. In response to the request packet, the management server allocates the first application feature information to the first application, includes the first application feature information in a reply packet of the request packet, and sends the reply packet to the service server. The request packet carries the service level requirement that the first application needs to meet, and a service level allocated by the management server to the first application meets the service level requirement.

In another example, the first application feature information determined in S105 may be specifically determined by the service server, and is enabled when the management server confirms that a corresponding network service can be provided. S104 to S106 may also specifically include: The service server sends a request packet to the management server, where the request packet is used to request the management server to allocate the first application feature information to the first application, the request packet carries the first application feature information, and the first application feature information includes at least the application identifier of the first application and a service level specified by the service server to the first application. In response to the request packet, the management server performs matching on the first application feature information in the request packet and a local network performance service capability. If the matching succeeds, the management server sends a reply packet of the request packet to the service server, where the reply packet indicates that the management server can provide the first application with a network service that meets the specified service level. If the matching fails, the management server determines that the management server currently cannot provide the first application with a network service that meets the specified service level. In this case, the management server may negotiate scheduling with the network device and the controller, so that a network performance service capability of the network obtained after scheduling negotiation can meet the specified service level of the first application. In this way, the management server may also feed back a reply packet to the service server, where the reply packet indicates that the management server can provide the first application with a network service that meets the specified service level. For example, that the management server may negotiate scheduling with the network device and the controller may mean: The management server indicates the controller to establish a first forwarding path that matches the specified service level in the first application feature information and deliver a correspondence between the first application feature information and path information of the first forwarding path to an ingress node of the first forwarding path. In this way, after the controller feeds back that the first forwarding path that matches the specified service level in the first application feature information is successfully established, the management server may consider that the management server currently can provide the first application with a network service that meets the specified service level. It can be learned that, in this example, the service server determines the first application feature information of the first application, to avoid a problem that complex conversion needs to be performed at network boundaries of different operators because a plurality of operators determine different application feature information for a same application in a cross-operator scenario. In the cross-operator scenario, an application determines application feature information. This helps provide a network service for the application and improves communication efficiency.

It should be noted that, in a case, S104 may be triggered to be performed when it is determined through negotiation that the target function can be enabled for the first application; in another case, S104 may be triggered to be performed when it is determined through negotiation that the target function can be enabled for the first application and the first application initiates a registration packet or a login packet to the service server.

After S106, the service server may further send the first application feature information to user equipment on which the first application is located, so that the first application on the user equipment may include the first application feature information in a service packet when sending the service packet, to identify that the service packet is from the first application. This provides a reliable data basis for effectively implementing application-level service control in this embodiment of this application.

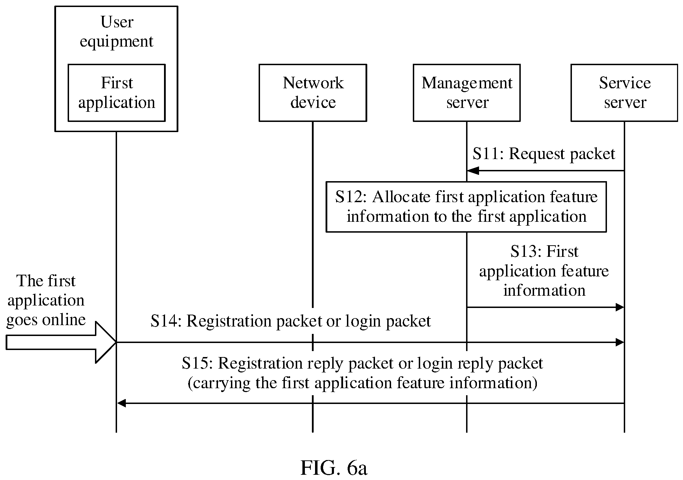

In an example, for a specific process in which the user equipment on which the first application is located obtains the first application feature information, refer to FIG. 6a. The process includes the following steps. S11: The service server sends a request packet to the management server, where the request packet is used to request the management server to allocate the first application feature information to the first application. S12: The management server allocates the first application feature information to the first application. S13: The management server sends the first application feature information to the service server. S14: The first application goes online, and the user equipment on which the first application is located sends a registration packet or a login packet to the service server. S15: The service server sends a registration reply packet or a login reply packet to the user equipment on which the first application is located, where the packet carries the first application feature information.

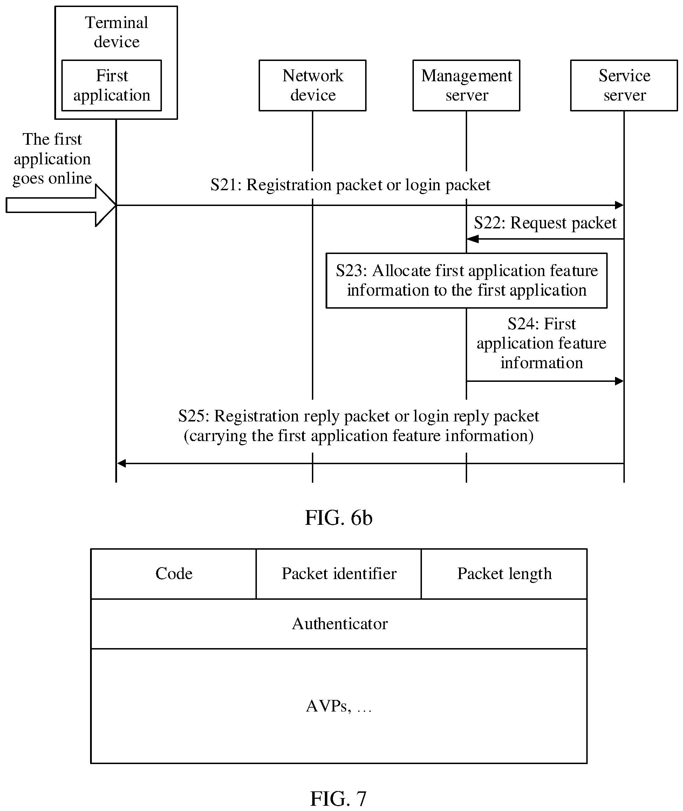

In another example, for a specific process in which the user equipment on which the first application is located obtains the first application feature information, refer to FIG. 6b. The process includes the following steps. S21: The first application goes online, and the user equipment on which the first application is located sends a registration packet or a login packet to the service server. S22: The service server sends a request packet to the management server, where the request packet is used to request the management server to allocate the first application feature information to the first application. S23: The management server allocates the first application feature information to the first application. S24: The management server sends the first application feature information to the service server. S25: The service server sends a registration reply packet or a login reply packet to the user equipment on which the first application is located, where the packet carries the first application feature information.

It should be noted that the request packet may carry an identifier of the user equipment, for example, an IP address of the user equipment. The identifier of the user equipment indicates the user equipment to which the first application belongs. The management server may determine, based on the identifier of the user equipment in the received request packet, the user to which the first application whose target function needs to be subscribed to belongs.

It should be noted that, if the first application is an application provided by the operator, the service server may directly interact with the management server in the foregoing operation. If the first application is an OTT application, in the foregoing operation, the service server may be an OTT service server, and the OTT service server may interact with the management server through an OTT subscription server.

For specific implementations in which allocating the IP address to the user equipment on which the first application is located: In a case, the network device may allocate a local IP address to the user equipment to which the first application belongs. In another case, if the network device is connected to a dynamic host configuration protocol (English: Dynamic Host Configuration Protocol, DHCP for short) server, the DHCP server may allocate the IP address to the user equipment to which the first application belongs. In still another case, the management server may also allocate the IPv6 address to the user equipment to which the first application belongs.

In a home broadband scenario, the user equipment of the user needs to be connected to a BNG through an RG. Therefore, the management server (namely, an AAA server) or the DHCP server in this scenario allocates, through IPv6 prefix delegation (English: Prefix Delegation, PD for short), an IPv6 address to the user equipment to which the first application belongs. During specific implementation, the AAA server or the DHCP server allocates an IPv6 prefix to the RG through the BNG, and the RG allocates a specific IPv6 address to the user equipment based on the IPv6 prefix.

It should be noted that an execution sequence of step S106 and steps S107 and S108 is not limited, and step S106 and steps S107 and S108 may be performed sequentially or simultaneously.

For S107, the operator may further allocate, on the management server, the corresponding first control policy to the first application, where the first control policy includes the correspondence between the first application feature information and the first execution action, and the first execution action may specifically include at least one of the following actions: first access management, first forwarding, first QoS guarantee, first authentication, first authorization, and first accounting. The first QoS guarantee action may be, for example, a QoS configuration file, and is used to provide a QoS priority that the first application needs to meet.

In the home broadband scenario, the network device may be a BNG, and the management server may be an AAA server. In this scenario, that the management server sends the first application feature information to the network device in S108 may specifically include: The AAA server sends a remote authentication dial-in user service (English: Remote Authentication Dial-In User Service, RADIUS for short) packet to the BNG, where the first application feature information is carried in the RADIUS packet, for example, may be carried in an extended TLV field in the RADIUS packet. FIG. 7 shows a format of the RADIUS packet. A code field is used to identify a type of the RADIUS packet. A packet identifier field is used to match a request packet with a response packet. A packet length field indicates a total length of the RADIUS packet. An authenticator field is used to perform authentication on a response from a server and encrypt a user password. An AVPs field is an attribute field used to carry execution actions such as forwarding, QoS guarantee, authentication, authorization, and accounting. In this embodiment of this application, a TLV field may be extended in the attribute field AVPs. For example, the TLV field is defined in the AVPs field of the RADIUS packet, a value of a type field in the TLV field is a type value that has not been used, and a value field in the TLV field is used to carry the first application feature information. For example, the value field in the extended TLV field carries the first application feature information shown in FIG. 1.

In a 5G mobile communication scenario, the network device may be a UPF entity, and the management server may be an SMF entity. In this scenario, that the management server sends the first application feature information to the network device in S 108 may specifically include: The SMF entity sends a packet to the UPF entity through an N4 interface. For example, the packet may carry the first application feature information by using an extended TLV field. For example, the packet may be a packet forwarding control protocol (English: Packet Forwarding Control Protocol, PFCP for short) packet. A TLV field is defined in the PFCP packet, and a value field in the TLV field is used to carry the first application feature information.

In addition, the management server may also allocate the first application feature information and the first execution action to the online user through a change of authorization (English: Change of Authorization, CoA for short) mechanism, and store, on the network device, the first control policy including the first application feature information and the first execution action.

It should be noted that a sending manner used by the management server to send the first execution action to the network device in S 108 is not a focus of this embodiment of this application, and details are not described.

It should be noted that in S 108, the management server may include the first application feature information and the first execution action in a same packet, and send the packet to the network device. The network device parses the packet to obtain the first application feature information and the first execution action, and may determine that the first application feature information and the first execution action correspond to a same application (namely, the first application). Therefore, the network device may locally store the first application feature information and the first execution action correspondingly. Alternatively, in S108, the management server may separately include the first application feature information and the first execution action in two different packets, and send the two packets to the network device. The network device needs to parse the two packets to separately obtain the first application feature information and the first execution action. In addition, the network device further needs to determine that both the first application feature information and the first execution action correspond to the first application, so that the network device can locally store the first application feature information and the first execution action correspondingly. The two packets that separately carry the first application feature information and the first execution action and that are received by the network device may have an association relationship (for example, carry a same identifier). The network device may determine, by identifying the association relationship, that the first application feature information corresponds to the first execution action.

If the network device is a system-level device in which a control plane (English: Control Plane, CP for short) and a user plane (English: User Plane, UP for short) are separated, the network device may be considered as a device including a CP device and a UP device. The CP device and the UP device connect and interact with each other through a control separation interface. In this case, that the management server sends the first control policy to the network device may specifically include: The control plane CP device of the network device receives the first control policy sent by the management server. The CP device of the network device sends the first control policy to the UP device of the network device. For example, the CP device sends the first control policy to the UP through a control-user separation interface. In this case, that the network device stores the first control policy is specifically: The UP device of the network device correspondingly stores the first application feature information and the first execution action. For example, in the home broadband scenario, the BNG includes a BNG CP and a BNG UP. In this case, that the management server sends the first control policy to the network device may specifically include: The BNG CP receives the first control policy sent by the AAA server. The BNG CP sends the first control policy to the BNG UP through a control-user separation interface. The BNG UP stores the first control policy.

It can be learned that, according to S104 to S108, the management server and the service server determine the first application feature information of the first application through negotiation, send the first application feature information to the user equipment to which the first application belongs, and send the first control policy to the network device. This provides a data basis for performing the method 100 in this embodiment of this application, and makes it possible to implement application-level refined service control.

It should be noted that S104 to S106 may be implemented as a separate embodiment. The management server configures corresponding application feature information for an application, to implement more refined application-level information configuration. S107 and S108 may also be implemented as a separate embodiment. The management server configures a corresponding control policy for an application, to implement more refined application-level information configuration. S104 to S108 may also be implemented as a separate embodiment. The management server configures corresponding application feature information and a corresponding control policy for an application, to implement more refined application-level information configuration. Therefore, application-level service control can be subsequently performed based on refined configuration information, so that provision of a high-quality network service for the application is ensured, and user experience is improved.

In some other possible implementations, before the first application sends the first service packet, this embodiment of this application may further include the following S 109 to S111.

S 109: The controller obtains the first application feature information of the first application.

S110: The controller determines, based on the first application feature information, the forwarding path corresponding to the first application.

S111: The controller sends the correspondence between the first application feature information and the path information of the forwarding path to the ingress node of the forwarding path.

For S 109, the controller may obtain the first application feature information from the management server or the network device, where the first application feature information includes at least the identifier of the first application and the allocated service level, and the first application feature information may further include the identifier of the user to which the first application belongs and the flow identifier in the first application.

After S109 and before S110, this embodiment of this application may further include: The controller determines at least one candidate path based on location information of an area served by the first application or the IP address of the user equipment to which the first application belongs. In this case, S110 may specifically include: The controller determines the forwarding path in the at least one candidate path based on the first application feature information, where the forwarding path meets the allocated service level in the first application feature information. In an example, the location information of the area served by the first application may be carried in the request packet in S104. In this case, that the controller determines at least one candidate path based on location information of an area served by the first application may specifically include: The controller establishes, based on the location information, at least one candidate path from a service area corresponding to the location information to the service server. In another example, the IP address of the user equipment to which the first application belongs may also be carried in the request packet in S 104. In this case, that the controller determines at least one candidate path based on location information of an area served by the first application may specifically include: The controller establishes, based on the IP address of the user equipment, at least one candidate path from the network device accessed by the user equipment to the service server.

It should be noted that, when the service server of the first application needs to negotiate with the operator to determine that the target function can be enabled for the first application, the service server may determine a data center gateway (English: Data Center Gateway, DC-GW for short) for the first application. In addition, the controller of the operator establishes, in each domain between the user equipment and the DC-GW, a forwarding path that can meet the allocated service level in the first application feature information, where the forwarding path can ensure that the service level requirement of the first application is met in the network domain of the operator. For example, transmitting a service packet corresponding to the first application on the forwarding path can ensure a deterministic requirement of the first application. For another example, transmitting a service packet corresponding to the first application on the forwarding path can ensure a low latency requirement of the first application that is latency-sensitive. In this way, the controller may record related information of the forwarding path as path information of the forwarding path.

The forwarding path determined by the controller may be a strict explicit path, or may be a loose path. This is not specifically limited in this embodiment of this application.

A path type of the forwarding path determined by the controller may be determined based on a type of the network domain, and specifically includes but is not limited to any one of the following path types: an SRv6 tunnel, a segment routing-multi-protocol label switching (English: Segment Routing-Multi-Protocol Label Switching, SR-MPLS for short) tunnel, a deterministic latency path, or a service chain. For example, if the network domain is a segment routing (English: Segment Routing, SR for short) network, the forwarding path determined by the controller may be, for example, an SRv6 tunnel or an SR-MPLS tunnel.

For specific implementations of S111: In a case, after the controller determines the path information of the forwarding path, a technical person may manually configure, on the ingress node of the forwarding path by configuring a command line, the correspondence between the first application feature information and the path information of the forwarding path in the ingress node of the forwarding path. In another case, the controller may also configure the correspondence between the first application feature information and the path information of the forwarding path to the ingress node of the forwarding path by using a YANG (English: Yet Another Next Generation) model packet. In still another case, the controller may also send a border gateway protocol (English: Border Gateway Protocol, BGP for short) packet or a path computation element protocol (English: Path Computation Element Protocol, PCEP for short) packet to the ingress node of the forwarding path, and include the correspondence between the first application feature information and the path information of the forwarding path in the BGP packet or the PCEP packet, to configure the correspondence between the first application feature information and the path information of the forwarding path on the ingress node of the forwarding path.

It should be noted that, if the management server and the controller are jointly disposed in one physical device, an execution body of S109 to S111 may also be referred to as a management server. Alternatively, if the management server and the controller belong to two physical devices, an execution body of S109 to S110 may also be the management server, and after S 110 and before S111, this embodiment of this application may further include: The management server sends the correspondence between the first application feature information and the path information of the forwarding path to the controller.

It should be noted that the ingress node of the forwarding path usually refers to two endpoint devices of the forwarding path. For example, when the determined forwarding path is a path between the BNG and the DC-GW, the ingress node of the forwarding path includes the BNG and the DC-GW. For ease of description, the path between the BNG and the DC-GW may include: a path from the BNG to the DC-GW and a path from the DC-GW to the BNG. For the path from the BNG to the DC-GW, an ingress node is the BNG. For the path from the DC-GW to the BNG, an ingress node is the DC-GW.

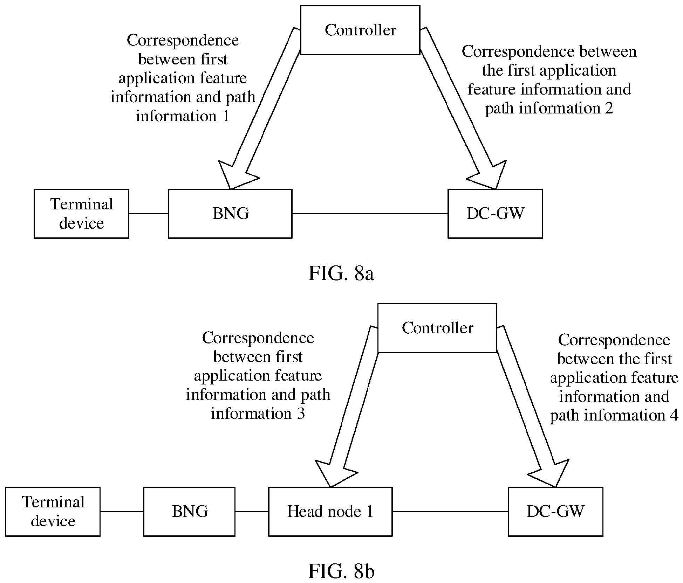

In an example, in a scenario shown in FIG. 8a, the user equipment may be connected to the DC-GW through the BNG. In this case, the forwarding path that corresponds to the first application and that is determined by the controller based on the first application feature information may include: a path 1 from the BNG to the DC-GW and a path 2 from the DC-GW to the BNG. Therefore, the controller configures a correspondence between path information 1 of the path 1 and the first application feature information to the BNG, and configures a correspondence between path information 2 of the path 2 and the first application feature information to the DC-GW. In this way, when receiving a service packet that carries the first application feature information and that is sent from the user equipment, the BNG may forward the service packet based on the path 1 indicated by the path information 1; when receiving a service packet that carries the first application feature information and that is sent from the service server, the DC-GW may forward the service packet based on the path 2 indicated by the path information 2. This ensures that a forwarding process of the service packet meets a requirement of the allocated service level corresponding to the application.

In another example, in a scenario shown in FIG. 8b, the user equipment may alternatively be connected to the DC-GW sequentially through the BNG and a head node 1. In this case, the forwarding path that corresponds to the first application and that is determined by the controller based on the first application feature information may include: a path 3 from the head node 1 to the DC-GW and a path 4 from the DC-GW to the head node 1. Therefore, the controller configures a correspondence between path information 3 of the path 3 and the first application feature information to the head node 1, and configures a correspondence between path information 4 of the path 4 and the first application feature information to the DC-GW. In this way, when receiving a service packet that carries the first application feature information and that is sent from the user equipment, the BNG sends the service packet to the head node 1, and the head node 1 forwards the service packet based on the path 3 indicated by the path information 3; when receiving a service packet that carries the first application feature information and that is sent from the service server, the DC-GW may forward the service packet based on the path 4 indicated by the path information 4. This ensures that a forwarding process of the service packet meets a requirement of the allocated service level corresponding to the application.

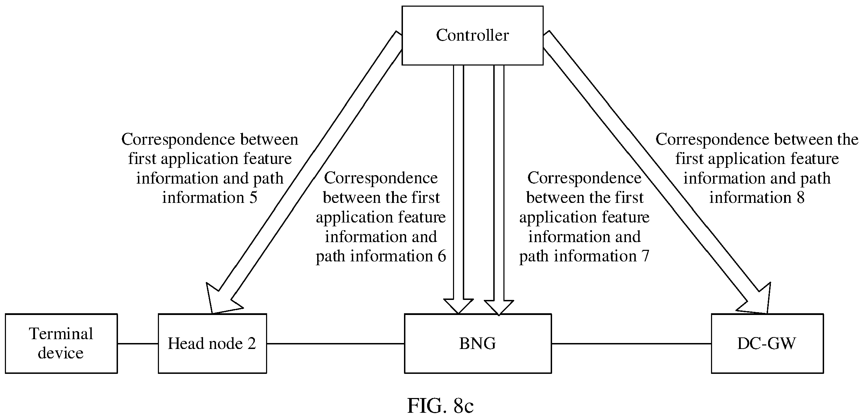

In still another example, in a scenario shown in FIG. 8c, the user equipment may alternatively be connected to the DC-GW sequentially through a head node 2 and the BNG. In this case, the forwarding path that corresponds to the first application and that is determined by the controller based on the first application feature information may include: a path 5 from the head node 2 to the BNG, a path 6 from the BNG to the head node 2, a path 7 from the BNG to the DC-GW, and a path 8 from the DC-GW to the BNG. Therefore, the controller configures a correspondence between path information 5 of the path 5 and the first application feature information to the head node 2, configures a correspondence between path information 6 of the path 6 and the first application feature information and a correspondence between path information 7 of the path 7 and the first application feature information to the BNG, and configures a correspondence between path information 8 of the path 8 and the first application feature information to the DC-GW. In this way, when receiving a service packet that carries the first application feature information and that is sent from the user equipment, the head node 2 forwards the service packet to the BNG based on the path information 5, and the BNG forwards the service packet to the DC-GW based on the path information 7; when receiving a service packet that carries the first application feature information and that is sent from the service server, the DC-GW forwards the service packet to the BNG based on the path information 8, and the BNG forwards the service packet to the head node 2 based on the path information 6. This ensures that a forwarding process of the service packet meets a requirement of the allocated service level corresponding to the application.

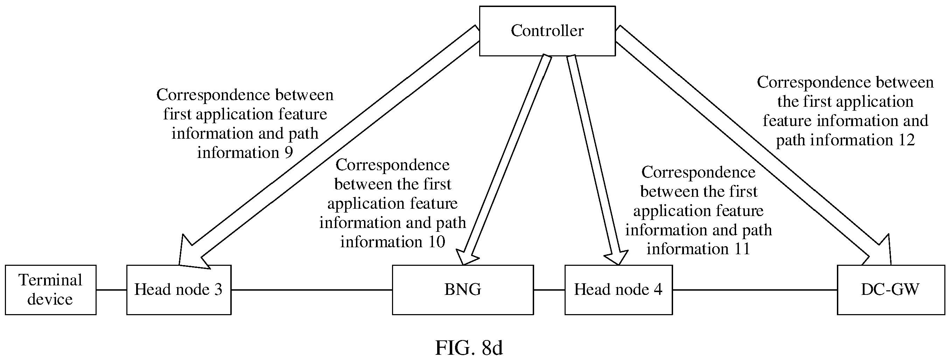

In yet another example, in a scenario shown in FIG. 8d, the user equipment may alternatively be connected to the DC-GW sequentially through a head node 3, the BNG, and a head node 4. In this case, the forwarding path that corresponds to the first application and that is determined by the controller based on the first application feature information may include: a path 9 from the head node 3 to the BNG, a path 10 from the BNG to the head node 3, a path 11 from the head node 4 to the DC-GW, and a path 12 from the DC-GW to the head node 4. Therefore, the controller configures a correspondence between path information 9 of the path 9 and the first application feature information to the head node 3, configures a correspondence between path information 10 of the path 10 and the first application feature information to the BNG, configures a correspondence between path information 11 of the path 11 and the first application feature information to the head node 4, and configures a correspondence between path information 12 of the path 12 and the first application feature information to the DC-GW. In this way, when receiving a service packet that carries the first application feature information and that is sent from the user equipment, the head node 3 forwards the service packet to the BNG based on the path information 9, the BNG sends the service packet to the head node 4, and the head node 4 forwards the service packet to the DC-GW based on the path information 11; when receiving a service packet that carries the first application feature information and that is sent from the service server, the DC-GW forwards the service packet to the head node 4 based on the path information 12, the head node 4 sends the service packet to the BNG, and the BNG forwards the service packet to the head node 3 based on the path information 10. This ensures that a forwarding process of the service packet meets a requirement of the allocated service level corresponding to the application.

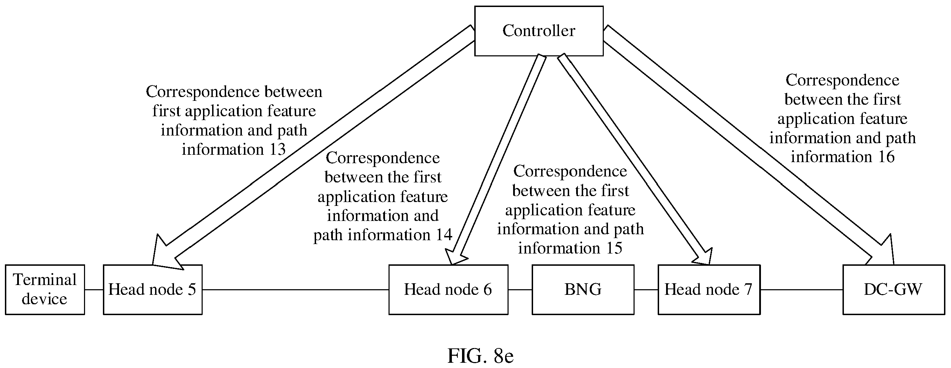

In still yet another example, in a scenario shown in FIG. 8e, the user equipment may alternatively be connected to the DC-GW sequentially through a head node 5, a head node 6, the BNG, and a head node 7. In this case, the path that corresponds to the first application and that is determined by the controller based on the first application feature information may include: a path 13 from the head node 5 to the head node 6, a path 14 from the head node 6 to the head node 5, a path 15 from the head node 7 to the DC-GW, and a path 16 from the DC-GW to the head node 7. Therefore, the controller configures a correspondence between path information 13 of the path 13 and the first application feature information to the head node 5, configures a correspondence between path information 14 of the path 14 and the first application feature information to the head node 6, configures a correspondence between path information 15 of the path 15 and the first application feature information to the head node 7, and configures a correspondence between path information 16 of the path 16 and the first application feature information to the DC-GW. In this way, when receiving a service packet that carries the first application feature information and that is sent from the user equipment, the head node 5 forwards the service packet to the head node 6 based on the path information 13, the head node 6 sends the service packet to the head node 7 through the BNG, and the head node 7 forwards the service packet to the DC-GW based on the path information 15; when receiving a service packet that carries the first application feature information and that is sent from the service server, the DC-GW forwards the service packet to the head node 7 based on the path information 16, the head node 7 sends the service packet to the head node 6 through the BNG, and the head node 6 forwards the service packet to the head node 5 based on the path information 14. This ensures that a forwarding process of the service packet meets a requirement of the allocated service level corresponding to the application.

It can be learned that, according to S109 to S111, after the management server and the service server determine the first application feature information of the first application through negotiation, the controller may determine the corresponding forwarding path for the first application based on the first application feature information, and send the correspondence between the first application feature information and the path information of the forwarding path to the ingress node of the forwarding path, so that it is possible to perform application-level control and forwarding on the first service packet according to the method 100 provided in this embodiment of this application.

It should be noted that S109 to S111 may be implemented as a separate embodiment. A forwarding path of a service packet sent by an application is determined by obtaining application feature information corresponding to the application, and a correspondence between the application feature information and path information of the forwarding path is delivered to an ingress node of the forwarding path, to implement more refined application-level information configuration. Therefore, application-level service packet forwarding can be subsequently performed based on refined configuration information. Forwarding the service packet on the path corresponding to the path information ensures that a requirement of an allocated service level corresponding to the application is met, and user experience is improved.

It should be noted that an execution sequence of steps S106 to S108 and steps S109 to S111 is not limited, and steps S106 to S108 and steps S109 to S111 may be performed sequentially or simultaneously.

After S104 to S111 are performed, the first application may include the first application feature information in the first service packet, and the user equipment on which the first application is located sends, to the network device, the first service packet carrying the first application feature information.

S102: The network device determines the first control policy based on the first application feature information, where the first control policy includes the correspondence between the first application feature information and the first execution action.

The network device may locally store at least one control policy, and each control policy includes a correspondence between application feature information and an execution action. The execution action specifically includes but is not limited to access management, forwarding, QoS guarantee, authentication, authorization, or accounting. For specific descriptions of the execution action, refer to related descriptions of S103 below.

In an example, when receiving the first service packet, the network device may parse the first service packet to obtain the first application feature information. Then, the network device searches for a group of control policies corresponding to the first application feature information from at least one group of locally stored control policies, and records an execution action in the group of control policies as the first execution action. In other words, the network device does not perform pre-analysis and classification pre-determining on the received service packet, but directly parses the received service packet to obtain the application feature information carried in the received service packet, to implement application-level refined processing on the service packet.

In another example, the network device may alternatively perform pre-analysis and pre-determining on the received service packet. During specific implementation, when receiving the first service packet, the network device may first determine whether the target function of the application to which the first service packet belongs is subscribed to. If the target function of the application to which the first service packet belongs is subscribed to, the network device parses the first service packet, reads the first application feature information from the first service packet, and searches for the first control policy corresponding to the first application feature information from at least one group of locally stored control policies. It can be learned that the network device may first perform pre-determining, and only reads the first application feature information and determines the corresponding first control policy for the service packet sent by the application whose target function is subscribed to. If the target function is not subscribed to, the network device does not read the first application feature information and determine the corresponding first control policy. This saves processing resources of the network device to some extent, and improves processing efficiency.

In this example, a method for determining whether the target function of the application from which the service packet comes is subscribed to is not specifically limited in this embodiment of this application. The following lists two possible implementations by using examples. Implementation 1: The network device classifies a user that subscribes to the target function and a user that does not subscribe to the target function into different domains. When receiving the first service packet, the network device may first determine, based on a packet feature of the first service packet, the user sending the first service packet. Then, the network device may determine, based on an attribute of a domain to which the user belongs, whether the user in the domain subscribes to the target function. In a case, an attribute of each domain is marked in advance. In another case, the target function subscribed to by the user may be determined based on the first application feature information in the first service packet, and the target function is used as the attribute of the domain. A method in which the network device determines, based on the packet feature of the first service packet, the domain to which the user corresponding to the first service packet belongs may include but is not limited to: (1) determining the domain to which the user belongs based on an IP prefix corresponding to an IP address of the first service packet; (2) determining the domain to which the user corresponding to the first service packet belongs based on a MAC address, a VLAN identifier (or QinQ), and an access interface of the first service packet; and (3) determining the domain to which the user corresponding to the first service packet belongs based on a source IP address, a MAC address, and a VLAN identifier (or QinQ) of the first service packet. Implementation 2: The network device stores a correspondence between a packet feature, a user, an application whose target function is subscribed to by the user, application feature information, and an execution action. In a case, the network device may store the correspondence in a correspondence table. For example, the correspondence table includes at least the following entries: a packet feature, a user, an application whose target function is subscribed to by the user, application feature information, and an execution action. In this case, the network device first determines, based on the correspondence table, a user corresponding to a packet feature, and then determines whether the user subscribes to the target function for an application. If the user subscribes to the target function for the application, the network device obtains application feature information from a service packet, performs matching on the obtained application feature information and the application feature information in the correspondence table, and determines an execution action corresponding to the successfully matched application feature information as an execution action corresponding to the application from which the service packet comes. In another case, the network device may alternatively store the correspondence in a plurality of correspondence tables. For example, a first correspondence table includes the following entries: a packet feature and a user, a second correspondence table includes a user and an application whose target function is subscribed to by the user, and a third correspondence table includes application feature information and an execution action. In this case, the network device first determines, based on the first correspondence table, a user corresponding to a packet feature, and then determines, based on the second correspondence table, whether the user subscribes to the target function for an application. If the user subscribes to the target function for the application, the network device obtains application feature information from a service packet, performs matching on the obtained application feature information and the application feature information in the third correspondence table, and determines an execution action corresponding to the successfully matched application feature information as an execution action corresponding to the application from which the service packet comes.

In this embodiment of this application, for a correspondence between application feature information and an execution action locally stored by the network device, in a case, each application whose target function is subscribed to corresponds to one group of control policies. For example, the network device locally stores a control policy 1 associated with an application 1 whose network acceleration function 1 is subscribed to, and a control policy 2 associated with an application 2 whose network acceleration function 2 is subscribed to. The control policy 1 may be a correspondence between application feature information 1 and an execution action 1. The control policy 2 may be a correspondence between application feature information 2 and an execution action 2. In this way, when receiving a service packet 1 carrying the application feature information 1, the network device may determine the control policy 1 corresponding to the application 1 based on the application feature information 1, to process the service packet 1 based on the execution action 1 in the control policy 1. In another case, different service flows in an application whose target function is subscribed to may also correspond to different control policies. In this case, application feature information needs to carry a flow identifier. For example, a network acceleration function 1 is subscribed to for a service flow 1 of an application 1, and a network acceleration function 2 is subscribed to for a service flow 2 of the application 1. The network device locally stores a control policy 3 and a control policy 4 that are respectively associated with the service flow 1 and the service flow 2 of the application 1. The control policy 3 may be a correspondence between application feature information 3 and an execution action 3. The control policy 4 may be a correspondence between application feature information 4 and a control policy 4. In this way, when receiving a service packet 3 carrying the application feature information 3, the network device may determine the control policy 3 corresponding to the service flow 1 based on the application feature information 3, to process the service packet 3 based on the execution action 3 in the control policy 3. Similarly, when receiving a service packet 4 carrying the application feature information 4, the network device may determine the control policy 4 corresponding to the service flow 2 based on the application feature information 4, to process the service packet 4 based on the execution action 4 in the control policy 4.

S103: The network device processes the first service packet based on the first execution action.

The network device is responsible for processing the service packet based on an action determined by the operator, for example, access management, QoS guarantee, authentication, authorization, or accounting.

When the first execution action includes a first authentication action, S103 may specifically include: The network device performs authentication on the first service packet based on the first authentication action. When the first execution action includes a first authorization action, S103 may specifically include: The network device performs authorization on the first service packet based on the first authorization action. When the first execution action includes a first accounting action, S103 may specifically include: The network device performs accounting on the first service packet based on the first accounting action.

When the first execution action includes a first QoS guarantee action, S103 may specifically include: The network device performs network resource scheduling for the first service packet based on a first QoS configuration file, and controls transmission of the service packet in the network to meet an indicator required by the first QoS configuration file, to implement the first QoS guarantee action.

When the first execution action includes a first access management action, S103 may specifically include: The network device performs, based on the first access management action, matching verification on the first application feature information carried in the first service packet and application feature information in any local control policy of the network device. When application feature information in all local control policies of the network device does not match the first application feature information, or a control policy that matches the first application feature information in all the local control policies of the network device does not include the access management execution action, the network device may discard the first service packet, to prevent the user from accessing the network.

When the network device is an ingress node of a forwarding path determined for the first service packet in a network domain, and the first execution action includes a first forwarding action, S103 may specifically include: The network device determines, based on the first forwarding action, that the first service packet needs to be forwarded. The network device locally stores path information of a plurality of forwarding paths, and path information of each forwarding path includes an IP address and a segment identifier list. In this case, after S103, this embodiment of this application may further include: The network device determines path information of a corresponding forwarding path based on the first application feature information in the first service packet. When determining that a destination IP of the first service packet matches an IP address included in the path information of the determined forwarding path, the network device adds a segment identifier list in the path information of the forwarding path to the first service packet, and forwards the first service packet based on the segment identifier list.

When the network device is not an ingress node of a forwarding path determined by the controller, the network device forwards the first service packet in a conventional forwarding manner. For an operation performed by an ingress node of a forwarding path determined in a network domain when the first service packet is forwarded to the ingress node, refer to the related descriptions of the operation performed by the network device when the network device is the ingress node of the forwarding path.

That the network device is an ingress node of a forwarding path determined in a network domain is used as an example. In an example, when the first service packet in S101 is a service packet received by the network device from the user equipment, S103 may specifically include: The network device determines, based on the first forwarding action, that a forwarding operation needs to be performed on the first service packet. Therefore, the network device determines path information of a forwarding path based on the first application feature information in the first service packet, and forwards the first service packet along the forwarding path based on the path information of the forwarding path. In other words, the path information of the forwarding path on the network device may be used to redirect the first application to the forwarding path. The forwarding path may be, for example, an SRv6 tunnel. Alternatively, in another case, the path information of the forwarding path on the network device may be used to redirect the first application to a specific virtual private network (English: Virtual Private Network, VPN for short). In this case, the network device forwards the first service packet in the specific VPN.

In another example, when the first service packet in S101 is received by the network device from the service server, the first service packet needs to be forwarded from the network device to the user equipment. In a case, if a layer 2 forwarding scenario exists between the network device and the user equipment and there is no network domain, for example, as shown in the scenarios shown in FIG. 8a and FIG. 8b, based on this feature, S103 may specifically include: The network device determines, based on the first forwarding action, that a forwarding operation needs to be performed on the first service packet, and therefore determines a first priority based on the first application feature information. Then, the network device forwards the first service packet to the user equipment based on the first priority. It should be noted that the first priority is a QoS level that can meet the allocated service level, and the allocated service level is information carried in the first application feature information in the first service packet. In another case, if a network domain exists between the network device and the user equipment, for example, as shown in the scenarios shown in FIG. 8c to FIG. 8e, S103 may specifically include: The network device determines, based on the first forwarding action, that a forwarding operation needs to be performed on the first service packet. Therefore, the network device determines path information of a forwarding path from the network device to a user equipment side based on the first application feature information in the first service packet, and forwards the first service packet along the forwarding path based on the path information of the forwarding path. Alternatively, the network device determines a VPN from the network device to a user equipment side based on the first application feature information in the first service packet, and forwards the first service packet in the VPN.

It can be learned that in this embodiment of this application, when the user has a special function requirement for one or more used applications, the network device may store, for the application for which the user has the special function requirement, a correspondence between application feature information and an execution action. A service packet of the application carries the application feature information corresponding to the application, so that the network device can determine, based on the correspondence stored by the network device and the application feature information in the service packet, the execution action that currently needs to be used for the application, and process the received service packet based on the execution action. This meets the special function requirement for the service packet, implements application-level service processing, makes it possible to flexibly provide a more refined network service for the user, and therefore improves user experience.

In some possible implementations, because the application feature information and the execution action of the application in this embodiment of this application are decoupled on the network device, when a network performance requirement of the application changes, the network device can meet a modified service level requirement of the application without modifying any information. During specific implementation, this embodiment of this application may further include the following steps.

S120: The network device receives a second service packet, where the second service packet belongs to the first application, the second service packet carries second application feature information, and the second application feature information is application feature information generated based on a new service level of the first application.

S121: The network device determines a second control policy based on the second application feature information, where the second control policy includes a correspondence between the second application feature information and a second execution action.

S122: The network device processes the second service packet based on the second execution action.

It should be noted that the at least one group of control policies included in the network device includes the correspondence between the first application feature information and the first control policy, and the correspondence between the second application feature information and the second control policy. The correspondence between the first application feature information and the first control policy is applicable to a service packet with a service level 1. The correspondence between the second application feature information and the second control policy is applicable to a service packet with a service level 2.

During specific implementation, because a service level requirement of the first service packet of the first application is the service level 1, the first service packet carries the first application feature information, and the first application feature information includes the service level 1. According to S101 to S103, the network device determines to control the first service packet based on the first execution action in the first control policy. Based on an actual requirement, before the second service packet of the first application is sent, if the service level requirement of the first application is changed to the service level 2, according to S104 to S111, a service processing system may reallocate the second application feature information to the first application, send the second control policy including the second application feature information and the second execution action to the network device, send the second application feature information to the user equipment through the service server, and send the second application feature information and path information of a newly determined forwarding path to an ingress node of a corresponding network domain, to ensure implementation of the foregoing S120 to S122. During specific implementation, the user equipment includes the second application feature information in the second service packet, where the second application feature information includes the service class 2. According to S 120 to S122, the network device determines to process the second service packet based on the second execution action in the second control policy.

It can be learned that in this embodiment of this application, considering that a network performance requirement of a same application may change in different scenarios at different moments, based on a fact that a correspondence between application feature information and an execution action is stored in the network device in this embodiment of this application, when a service level requirement of the application changes, application feature information is redetermined for the application based on a new service level requirement, and a correspondence between the new application feature information and an execution action is stored in the network device. The user equipment includes the new application feature information to a service packet when sending the service packet. The network device may determine, based on the changed application feature information in the received service packet, the stored execution action corresponding to the changed application feature information. This implements application-level service processing simply, flexibly, and effectively after the service level requirement of the application changes, and improves user experience.

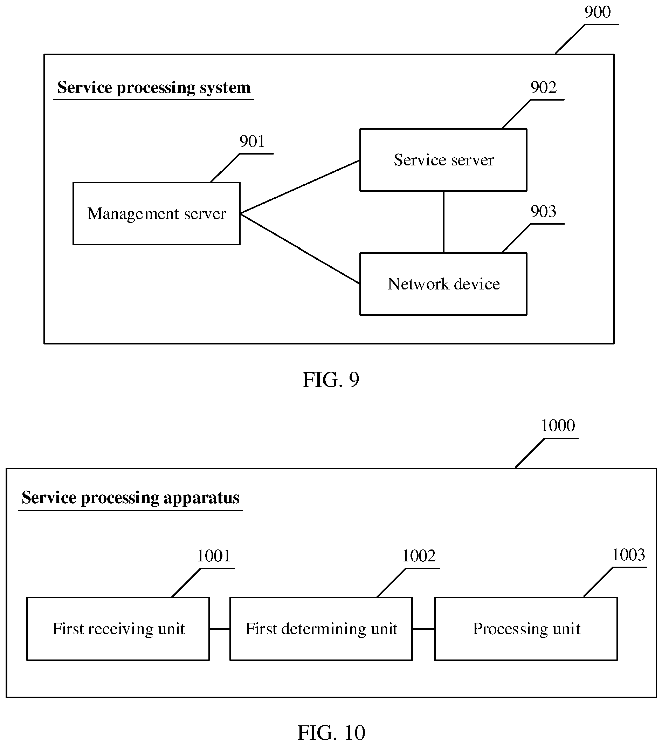

Correspondingly, an embodiment of this application further provides a service processing system 900, as shown in FIG. 9. The service processing system 900 includes a management server 901, a service server 902, and a network device 903. The service server 902 is configured to send a request packet to the management server, where the request packet includes an identifier and a service level requirement of an application. The management server 901 is configured to: receive the request packet sent by an application server, allocate a service level that meets the service level requirement to the application corresponding to the identifier of the application, generate application feature information, and send the application feature information to the service server, where the application feature information includes the identifier of the application and the allocated service level. The service server 902 is further configured to send the application feature information to user equipment. The management server 901 is further configured to: generate a control policy based on the application feature information, and send the control policy to the network device, where the control policy includes a correspondence between the application feature information and an execution action. The network device 903 is configured to: receive the control policy sent by the management server, receive a service packet sent by the user equipment, and process the service packet based on the execution action in the control policy, where the service packet includes the application feature information.

A service level corresponding to the service level requirement is the same as the allocated service level.

In an example, the request packet includes location information. In this case, the management server 901 is further configured to: establish, based on the location information, a forwarding path from a service area corresponding to the location information to the service server, where the forwarding path meets a requirement of the allocated service level; and send a forwarding policy to an ingress node of the forwarding path, where the forwarding policy includes path information corresponding to the forwarding path.

In an example, the service server 902 is further configured to send the request packet to the management server 901 after receiving a registration packet sent by a user. The registration packet includes an IP address of the user equipment, and the request packet includes the IP address of the user equipment. In this case, the management server 901 is further configured to establish, based on the IP address of the user equipment, a forwarding path from the network device accessed by the user equipment to the service server, where the forwarding path meets the requirement of the allocated service level.

It should be noted that, for specific implementations and achieved effects of the service processing system 900, refer to related descriptions in the method 100.

In addition, an embodiment of this application further provides a service processing apparatus 1000, as shown in FIG. 10. The service processing apparatus 1000 is used in a network device, and the apparatus 1000 includes a first receiving unit 1001, a first determining unit 1002, and a processing unit 1003. The first receiving unit 1001 is configured to receive a service packet, where the service packet carries application feature information, the application feature information represents a related feature of an application, and the service packet belongs to the application. The first determining unit 1002 is configured to determine a control policy based on the application feature information, where the control policy includes a correspondence between the application feature information and an execution action. The processing unit 1003 is configured to process the service packet based on the execution action.

The application feature information includes an identifier of the application and a service level of the application.

The application feature information further includes an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application.

In an example, the apparatus 1000 further includes a second receiving unit. The second receiving unit is configured to receive the control policy from a management server of an operator.

In a possible implementation, the network device is a broadband network gateway BNG, and the second receiving unit is specifically configured to receive the control policy from an authentication, authorization, and accounting AAA server.

In an example, the BNG is a system in which a control plane CP and a user plane UP are separated, the system includes a CP device and a UP device, and the second receiving unit includes a receiving subunit and a sending subunit. The receiving subunit is configured to receive the control policy sent by the AAA server, and the sending subunit is configured to send the control policy to the UP device.

The control policy is carried in a remote authentication dial-in user service RADIUS packet sent by the AAA server.

In another possible implementation, the network device is a user plane function UPF entity, and the second receiving unit is specifically configured to receive the control policy from a session management function SMF entity.

In an example, the second receiving unit is specifically configured to receive the control policy sent by the SMF entity through an N4 interface.

In a possible implementation, the apparatus 1000 further includes a second determining unit. The second determining unit is configured to: before the control policy is determined based on the application feature information, determine that the user sending the service packet has subscribed to a target function of the application. In an example, the second determining unit is specifically configured to: determine, based on a source media access control MAC address of the user, a virtual local area network VLAN identifier, and an access interface, the user sending the service packet; and determine, based on the application feature information in the service packet, the target function that is of the application and that is subscribed to by the user.

The target function includes one or more of the following functions: application acceleration, game equipment upgrade, or automatic renewal.

The execution action includes at least one of the following actions: access management, forwarding, QoS guarantee, authentication, authorization, or accounting.

In another possible implementation, the apparatus 1000 further includes a third receiving unit and a forwarding unit. The third receiving unit is configured to receive path information of a forwarding path, where the path information of the forwarding path includes an internet protocol IP address and a segment identifier list. The forwarding unit is configured to: when it is determined that a destination IP of the service packet matches the IP address included in the path information of the forwarding path, add the segment identifier list to the service packet, and forward the service packet based on the segment identifier list.

It should be noted that the service processing apparatus 1000 corresponds to operations performed by the network device in the method 100. For specific implementations and achieved effects of the service processing apparatus 1000, refer to related descriptions in the method 100.

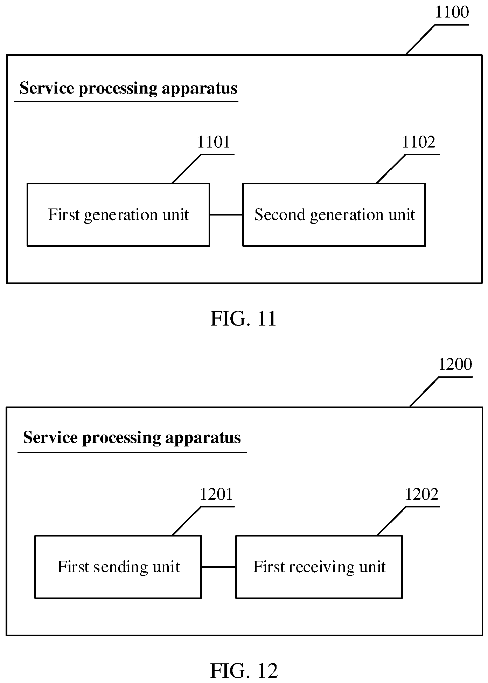

In addition, an embodiment of this application further provides a service processing apparatus 1100, as shown in FIG. 11. The service processing apparatus 1100 is used in a management server, and the apparatus 1100 includes a first generation unit 1101 and a second generation unit 1102. The first generation unit 1101 is configured to generate corresponding application feature information for an application, where the application feature information includes an identifier of the application and an allocated service level, and the allocated service level meets a service level requirement of the application. The second generation unit 1102 is configured to generate a control policy based on the application feature information, where the control policy includes a correspondence between the application feature information and an execution action.

In a possible implementation, the apparatus 1100 further includes a first sending unit. The first sending unit is configured to send the application feature information to a service server corresponding to the application.

In a possible implementation, the apparatus 1100 further includes a first receiving unit and a first allocation unit. The first receiving unit is configured to: before the corresponding application feature information is generated for the application, receive a request packet sent by the service server, where the request packet includes the identifier and the service level requirement of the application. The first allocation unit is configured to allocate a service level that meets the service level requirement to the application corresponding to the identifier of the application.

In another possible implementation, the apparatus 1100 further includes a second receiving unit and a second allocation unit. The second receiving unit is configured to: before the corresponding application feature information is generated for the application, receive a request packet sent by the service server, where the request packet includes the identifier of the application and a specified service level. The second allocation unit is configured to allocate the specified service level to the application corresponding to the identifier of the application.

The application feature information further includes an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application.

In a possible implementation, the apparatus 1100 further includes a second sending unit. The second sending unit is configured to send the control policy to a network device.

In an example, the management server is an authentication, authorization, and accounting AAA server, and the second sending unit is specifically configured to send the control policy to a broadband network gateway BNG. The control policy is carried in a remote authentication dial-in user service RADIUS packet sent by the AAA server.

In another example, the management server is a session management function SMF entity, and the second sending unit is specifically configured to send the control policy to a user plane function UPF entity.

The execution action includes at least one of the following actions: access management, forwarding, QoS guarantee, authentication, authorization, or accounting.

It should be noted that the service processing apparatus 1100 corresponds to operations performed by the management server in the method 100. For specific implementations and achieved effects of the service processing apparatus 1100, refer to related descriptions in the method 100.

In addition, an embodiment of this application further provides a service processing apparatus 1200, as shown in FIG. 12. The service processing apparatus 1200 is used in a service server, and the apparatus 1200 includes a first sending unit 1201 and a first receiving unit 1202. The first sending unit 1201 is configured to send a request packet to a management server, where the request packet includes an identifier and a service level requirement of an application. The first receiving unit 1202 is configured to receive application feature information sent by the management server, where the application feature information includes the identifier of the application and an allocated service level, and the allocated service level meets the service level requirement.

The service level requirement is a specified service level, and the specified service level is the same as the allocated service level.

In a possible implementation, the apparatus 1200 further includes a second receiving unit. The second receiving unit is configured to receive a registration packet sent by user equipment to which the application belongs.

In an example, the sending unit is specifically configured to send the request packet to the management server in response to receiving the registration packet sent by the user equipment to which the application belongs.

In another example, the apparatus 1200 further includes a third receiving unit. The third receiving unit is configured to: after the application feature information sent by the management server is received, receive a registration packet sent by user equipment to which the application belongs.

In another example, the apparatus 1200 further includes a second sending unit. The second sending unit is configured to send the application feature information to the user equipment to which the application belongs.

The application feature information further includes an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application.

It should be noted that the service processing apparatus 1200 corresponds to operations performed by the service server in the method 100. For specific implementations and achieved effects of the service processing apparatus 1200, refer to related descriptions in the method 100.

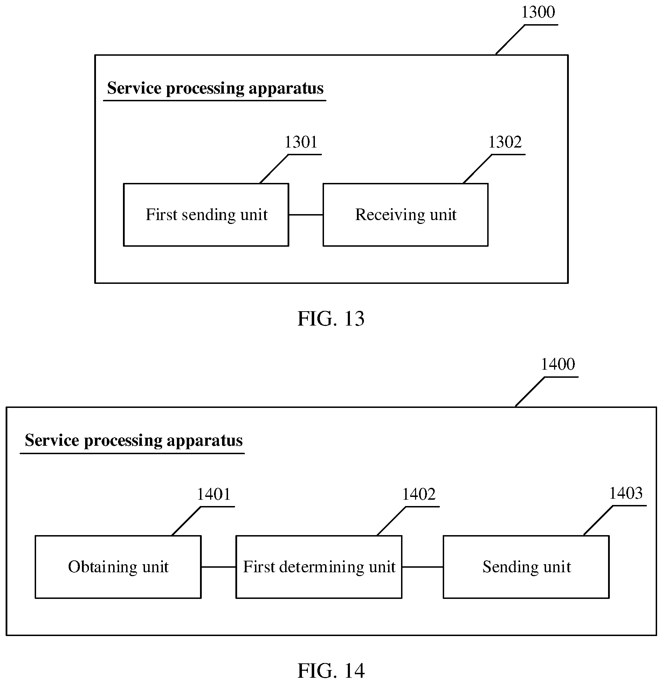

In addition, an embodiment of this application further provides a service processing apparatus 1300, as shown in FIG. 13. The service processing apparatus 1300 is used in user equipment, and the apparatus 1300 includes a first sending unit 1301 and a receiving unit 1302. The first sending unit 1301 is configured to send a registration packet to a service server, where the service server provides a service for an application on the user equipment. The receiving unit 1302 is configured to receive a response packet that is of the registration packet and that is sent by the service server, where the response packet carries application feature information, and the application feature information includes an identifier of the application and an allocated service level.

The application feature information further includes an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application.

In a possible implementation, the apparatus 1300 further includes a second sending unit. The second sending unit is configured to send a service packet to a network device, where the service packet carries the application feature information, and the service packet belongs to the application.

It should be noted that the service processing apparatus 1300 corresponds to operations performed by the user equipment in the method 100. For specific implementations and achieved effects of the service processing apparatus 1300, refer to related descriptions in the method 100.

In addition, an embodiment of this application further provides a service processing apparatus 1400, as shown in FIG. 14. The service processing apparatus 1400 is used in a controller, and the apparatus 1400 includes an obtaining unit 1401, a first determining unit 1402, and a sending unit 1403. The obtaining unit 1401 is configured to obtain application feature information of an application, where the application feature information includes an identifier and a service level of the application. The first determining unit 1402 is configured to determine, based on the application feature information, a forwarding path corresponding to the application. The sending unit 1403 is configured to send a correspondence between the application feature information and path information of the forwarding path to an ingress node of the forwarding path.

In a possible implementation, the apparatus 1400 further includes a second determining unit. The second determining unit is configured to determine at least one candidate path based on location information of an area served by the application or an IP address of user equipment to which the application belongs. In this case, the first determining unit 1402 is specifically configured to determine the forwarding path in the at least one candidate path based on the application feature information, where the forwarding path meets the allocated service level in the application feature information.

The application feature information further includes an identifier of a user to which the application belongs and/or a flow identifier of the application. The flow identifier included in the application feature information may be some specified or important flow identifiers in the application. For example, if the application is a game application, the application feature information may include a flow identifier corresponding to an action instruction in the game application.

In an example, the sending unit 1403 is specifically configured to: send the correspondence to the ingress node of the forwarding path by using a YANG model packet; or send the correspondence to the ingress node of the forwarding path by using a border gateway protocol BGP packet or a path computation element protocol PCEP packet.

In another example, the first determining unit 1402 is specifically configured to determine, based on the application feature information, a first forwarding path and a second forwarding path that correspond to the application, where directions of the first forwarding path and the second forwarding path are opposite. In this case, the sending unit 1403 is specifically configured to send a correspondence between the application feature information and first path information of the first forwarding path to an ingress node of the first forwarding path.

A type of the forwarding path includes at least one of the following: a segment routing-internet protocol version 6 SRv6 tunnel, a segment routing-multi-protocol label switching SR-MPLS tunnel, a deterministic latency path, or a service chain.

In an example, the obtaining unit 1401 is specifically configured to: receive the application feature information from a management server or a service server; or determine the application feature information in response to a request of a service server.

In another possible implementation, the first determining unit 1402 is specifically configured to determine, based on the allocated service level, the forwarding path corresponding to the application.

It should be noted that the service processing apparatus 1400 corresponds to operations performed by the controller in the method 100. For specific implementations and achieved effects of the service processing apparatus 1400, refer to related descriptions in the method 100.

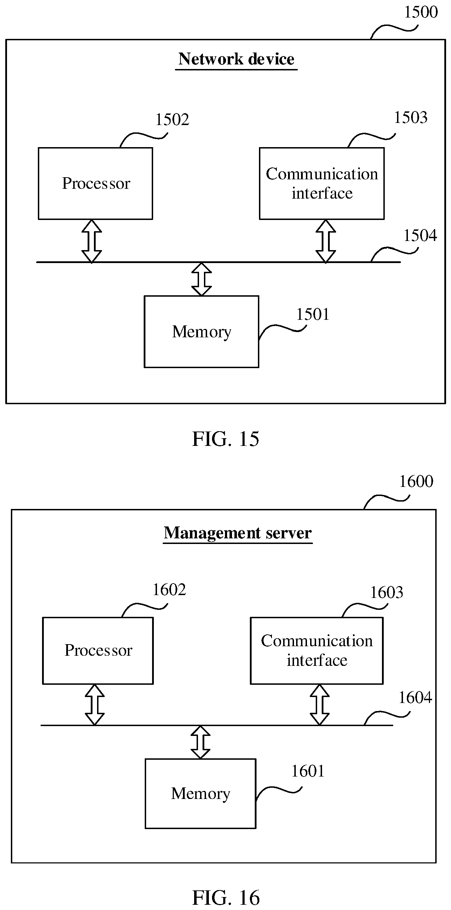

In addition, with reference to FIG. 15, an embodiment of this application further provides a network device 1500. The network device 1500 can implement functions of the network device 120 in the embodiment shown in FIG. 2. The network device 1500 includes a memory 1501, a processor 1502, and a communication interface 1503.

The memory 1501 is configured to store a computer program or instructions.

The processor 1502 is configured to invoke the computer program or the instructions stored in the memory, to enable the network device to perform the method implemented by the network device in the embodiment shown in FIG. 5A and FIG. 5B.

The communication interface 1503 is configured to communicate with another device in a network.

The memory 1501, the processor 1502, and the communication interface 1503 are connected to each other through a bus 1504. The bus 1504 may be a peripheral component interconnect (English: peripheral component interconnect, PCI for short) bus, an extended industry standard architecture (English: extended industry standard architecture, EISA for short) bus, or the like. The bus may be classified into an address bus, a data bus, a control bus, and the like. For ease of representation, only one thick line is used to represent the bus in FIG. 15, but this does not mean that there is only one bus or only one type of bus.

In a specific embodiment, the processor 1501 is configured to generate at least one SID based on a locator and at least one function. For a detailed processing process of the processor 1501, refer to S102 and S103 in the embodiment shown in FIG. 5A and FIG. 5B. Details are not described herein again.

The communication interface 1503 is configured to receive a first service packet. For a specific process, refer to S101 in the embodiment shown in FIG. 5A and FIG. 5B. Details are not described herein again.

With reference to FIG. 16, an embodiment of this application further provides a management server 1600. The management server 1600 can implement functions of the management server in the embodiment shown in FIG. 5A and FIG. 5B. The management server 1600 includes a memory 1601, a processor 1602, and a communication interface 1603.

The memory 1601 is configured to store a computer program or instructions.

The processor 1602 is configured to invoke the computer program or the instructions stored in the memory, to enable the management server to perform the method implemented by the management server in the embodiment shown in FIG. 5A and FIG. 5B.

The communication interface 1603 is configured to communicate with another device in a network.

The memory 1601, the processor 1602, and the communication interface 1603 are connected to each other through a bus 1604. The bus 1604 may be a PCI bus, an EISA bus, or the like. The bus may be classified into an address bus, a data bus, a control bus, and the like. For ease of representation, only one thick line is used to represent the bus in FIG. 16, but this does not mean that there is only one bus or only one type of bus.

In a specific embodiment, the processor 1601 is configured to generate first application feature information of a first application. For a detailed processing process of the processor 1601, refer to S105 and S 107 in the embodiment shown in FIG. 5A and FIG. 5B. Details are not described herein again.

The communication interface 1603 is configured to send the first application feature information to a service server. For a specific process, refer to S106 and S104 in the embodiment shown in FIG. 5A and FIG. 5B. Details are not described herein again.

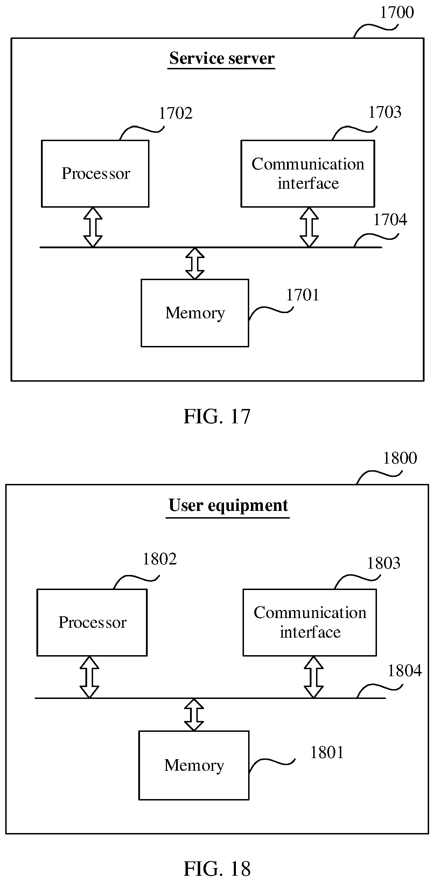

With reference to FIG. 17, an embodiment of this application further provides a service server 1700. The service server 1700 can implement functions of the service server in the embodiment shown in FIG. 5A and FIG. 5B. The service server 1700 includes a memory 1701, a processor 1702, and a communication interface 1703.

The memory 1701 is configured to store a computer program or instructions.

The processor 1702 is configured to invoke the computer program or the instructions stored in the memory, to enable the service server to perform the method implemented by the service server in the embodiment shown in FIG. 5A and FIG. 5B.

The communication interface 1703 is configured to communicate with another device in a network.

The memory 1701, the processor 1702, and the communication interface 1703 are connected to each other through a bus 1704. The bus 1704 may be a PCI bus, an EISA bus, or the like. The bus may be classified into an address bus, a data bus, a control bus, and the like. For ease of representation, only one thick line is used to represent the bus in FIG. 17, but this does not mean that there is only one bus or only one type of bus.

In a specific embodiment, the communication interface 1703 is configured to send a request packet to a management server. For a specific process, refer to S106 and S104 in the embodiment shown in FIG. 5A and FIG. 5B. Details are not described herein again.

With reference to FIG. 18, an embodiment of this application further provides user equipment 1800. The user equipment 1800 can implement functions of the user equipment in the embodiment shown in FIG. 5A and FIG. 5B. The user equipment 1800 includes a memory 1801, a processor 1802, and a communication interface 1803.

The memory 1801 is configured to store a computer program or instructions.

The processor 1802 is configured to invoke the computer program or the instructions stored in the memory, to enable the user equipment to perform the method implemented by the user equipment in the embodiment shown in FIG. 5A and FIG. 5B.

The communication interface 1803 is configured to communicate with another device in a network.

The memory 1801, the processor 1802, and the communication interface 1803 are connected to each other through a bus 1804. The bus 1804 may be a PCI bus, an EISA bus, or the like. The bus may be classified into an address bus, a data bus, a control bus, and the like. For ease of representation, only one thick line is used to represent the bus in FIG. 18, but this does not mean that there is only one bus or only one type of bus.

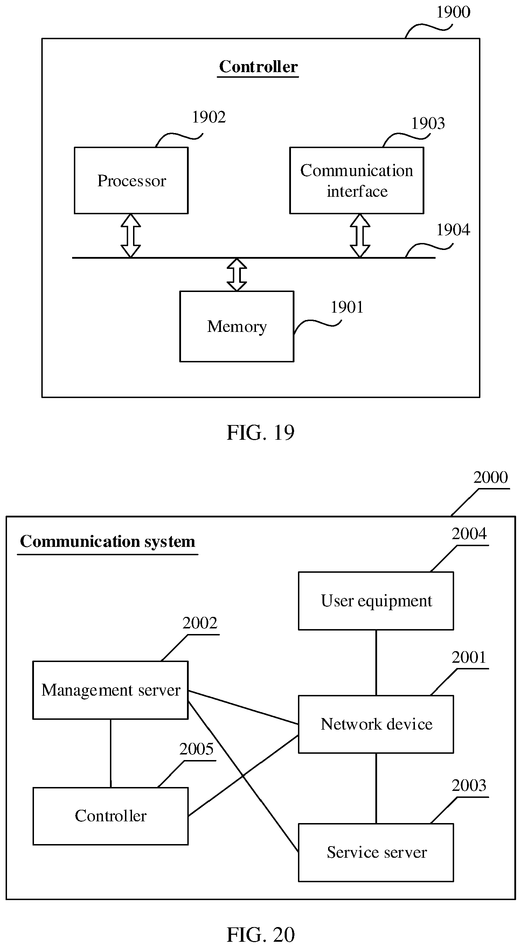

With reference to FIG. 19, an embodiment of this application further provides a controller 1900. The controller 1900 can implement functions of the controller in the embodiment shown in FIG. 5A and FIG. 5B. The controller 1900 includes a memory 1901, a processor 1902, and a communication interface 1903.

The memory 1901 is configured to store a computer program or instructions.

The processor 1902 is configured to invoke the computer program or the instructions stored in the memory, to enable the controller to perform the method implemented by the controller in the embodiment shown in FIG. 5A and FIG. 5B.

The communication interface 1903 is configured to communicate with another device in a network.

The memory 1901, the processor 1902, and the communication interface 1903 are connected to each other through a bus 1904. The bus 1904 may be a PCI bus, an EISA bus, or the like. The bus may be classified into an address bus, a data bus, a control bus, and the like. For ease of representation, only one thick line is used to represent the bus in FIG. 19, but this does not mean that there is only one bus or only one type of bus.

In a specific embodiment, the processor 1901 is configured to determine, based on first application feature information, a forwarding path corresponding to a first application. For a detailed processing process of the processor 1901, refer to S110 and S111 in the embodiment shown in FIG. 5A and FIG. 5B. Details are not described herein again.

The communication interface 1903 is configured to send a correspondence between the first application feature information and path information of the forwarding path to a network device. For a specific process, refer to S111 in the embodiment shown in FIG. 5A and FIG. 5B. Details are not described herein again.

The memory 1501 to the memory 1901 each may be a random access memory (English: random access memory, RAM for short), a flash memory (English: flash), a read-only memory (English: read-only memory, ROM for short), an erasable programmable read-only memory (English: erasable programmable read-only memory, EPROM for short), an electrically erasable programmable read-only memory (English: electrically erasable programmable read-only memory, EEPROM for short), a register (English: register), a hard disk, a removable hard disk, a CD-ROM, or a storage medium of any other form known to persons skilled in the art.

The processor 1502 to the processor 1902 each may be, for example, a central processing unit (English: central processing unit, CPU for short), a general-purpose processor, a digital signal processor (English: digital signal processor, DSP for short), an application-specific integrated circuit (English: application-specific integrated circuit, ASIC for short), a field programmable gate array (English: field programmable gate array, FPGA for short) or another programmable logic device, a transistor logic device, a hardware component, or any combination thereof. The processor may implement or perform various example logical blocks, modules, and circuits described with reference to content disclosed in this application. The processor may alternatively be a combination of processors implementing a computing function, for example, a combination of one or more microprocessors, or a combination of a DSP and a microprocessor.

The communication interface 1503 to the communication interface 1903 each may be, for example, an interface card, and may be an Ethernet (English: ethernet) interface or an asynchronous transfer mode (English: asynchronous transfer mode, ATM for short) interface.

An embodiment of this application further provides a communication system 2000. With reference to FIG. 20, the communication system 2000 includes a network device 2001, a management server 2002, a service server 2003, user equipment 2004, and a controller 2005. The network device 2001 may be the service processing apparatus 1000, the management server 2002 may be the service processing apparatus 1100, the service server 2003 may be the service processing apparatus 1200, the user equipment 2004 may be the service processing apparatus 1300, and the controller 2005 may be the service processing apparatus 1400. Alternatively, the network device 2001 may be the network device 1500, the management server 2002 may be the management server 1600, the service server 2003 may be the service server 1700, the user equipment 2004 may be the user equipment 1800, and the controller 2005 may be the controller 1900.

An embodiment of this application provides a computer-readable storage medium, including instructions. When the instructions are run on a computer, the computer is enabled to perform the foregoing service processing method.

An embodiment of this application further provides a chip. The chip is disposed in the service processing apparatus 1000 or the network device 1500, and includes a processor and an interface circuit. The interface circuit is configured to receive code instructions and transmit the code instructions to the processor. The processor is configured to run the code instructions to perform the service processing method applied to the network device in the embodiment shown in FIG. 5A and FIG. 5B.

An embodiment of this application further provides a chip. The chip is disposed in the service processing apparatus 1100 or the management server 1600, and includes a processor and an interface circuit. The interface circuit is configured to receive code instructions and transmit the code instructions to the processor. The processor is configured to run the code instructions to perform the service processing method applied to the management server in the embodiment shown in FIG. 5A and FIG. 5B.

An embodiment of this application further provides a chip. The chip is disposed in the service processing apparatus 1200 or the service server 1700, and includes a processor and an interface circuit. The interface circuit is configured to receive code instructions and transmit the code instructions to the processor. The processor is configured to run the code instructions to perform the service processing method applied to the service server in the embodiment shown in FIG. 5A and FIG. 5B.

An embodiment of this application further provides a chip. The chip is disposed in the service processing apparatus 1300 or the user equipment 1800, and includes a processor and an interface circuit. The interface circuit is configured to receive code instructions and transmit the code instructions to the processor. The processor is configured to run the code instructions to perform the service processing method applied to the user equipment in the embodiment shown in FIG. 5A and FIG. 5B.

An embodiment of this application further provides a chip. The chip is disposed in the service processing apparatus 1400 or the controller 1900, and includes a processor and an interface circuit. The interface circuit is configured to receive code instructions and transmit the code instructions to the processor. The processor is configured to run the code instructions to perform the service processing method applied to the controller in the embodiment shown in FIG. 5A and FIG. 5B.

In this application, "at least one item (piece)" refers to one or more, and "a plurality of" refers to two or more. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural. In this application, it is considered that "A and/or B" includes only A, only B, and both A and B.

In the specification, claims, and accompanying drawings of this application, the terms "first", "second", "third", "fourth", and the like (if existent) are intended to distinguish between similar objects but do not necessarily indicate a specific order or sequence. It should be understood that data termed in such a way is interchangeable in proper circumstances, so that embodiments described herein can be implemented in orders other than the order illustrated or described herein. Moreover, the terms "include" and "contain" and any other variants mean to cover the non-exclusive inclusion. For example, a process, method, system, product, or device that includes a list of steps or units is not necessarily limited to those expressly listed steps or units, but may include other steps or units that are not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical module division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, may be located in one location, or may be distributed on a plurality of network units. Some or all of the units may be obtained based on an actual requirement to achieve the objectives of the solutions of embodiments.

In addition, module units in embodiments of this application may be integrated into one processing unit, or each of the units may exist alone physically, or two or more units may be integrated into one unit. The integrated unit may be implemented in a form of hardware, or may be implemented in a form of a software module unit.

When the integrated unit is implemented in the form of the software module unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (English: Read-Only Memory, ROM for short), a random access memory (English: Random Access Memory, RAM for short), a magnetic disk, or an optical disc.

Persons skilled in the art should be aware that, in the foregoing one or more examples, the functions described in this application may be implemented by using hardware, software, firmware, or any combination thereof. When the functions are implemented by using software, the functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose computer or a dedicated computer.

The objectives, technical solutions, and beneficial effects of this application are further described in detail in the foregoing specific implementations. It should be understood that the foregoing descriptions are merely specific implementations of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A service processing method, comprising:
receiving, by a network device, a service packet, wherein the service packet carries application feature information, the application feature information represents a related feature of an application, and the service packet belongs to the application;
determining, by the network device, a control policy based on the application feature information, wherein the control policy comprises a correspondence between the application feature information and an execution action; and
processing, by the network device, the service packet based on the execution action.

2. The method according to claim 1, wherein
the application feature information comprises an identifier of the application and a service level of the application.

3. The method according to claim 2, wherein the application feature information further comprises an identifier of a user to which the application belongs and/or a flow identifier of the application.

4. The method according to any one of claims 1 to 3, wherein the method further comprises:
receiving, by the network device, the control policy from a management server of an operator.

5. The method according to claim 4, wherein the network device is a broadband network gateway BNG, and the receiving, by the network device, the control policy from a management server of an operator comprises:
receiving, by the BNG, the control policy from an authentication, authorization, and accounting AAA server.

6. The method according to claim 5, wherein the BNG is a system in which a control plane CP and a user plane UP are separated, the system comprises a CP device and a UP device, and the receiving, by the BNG, the control policy from an AAA server comprises:
receiving, by the CP device, the control policy sent by the AAA server; and
sending, by the CP device, the control policy to the UP device.

7. The method according to claim 5 or 6, wherein the control policy is carried in a remote authentication dial-in user service RADIUS packet sent by the AAA server.

8. The method according to claim 4, wherein the network device is a user plane function UPF entity, and the receiving, by the network device, the control policy from a management server of an operator comprises:
receiving, by the UPF entity, the control policy from a session management function SMF entity.

9. The method according to claim 8, wherein the receiving, by the UPF entity, the control policy from a session management function SMF entity comprises:
receiving, by the UPF entity, the control policy sent by the SMF entity through an N4 interface.

10. The method according to any one of claims 1 to 9, wherein before the determining, by the network device, a control policy based on the application feature information, the method further comprises:
determining, by the network device, that the user sending the service packet has subscribed to a target function of the application.

11. The method according to claim 10, wherein the determining, by the network device, that the user sending the service packet has subscribed to a target function of the application comprises:
determining, by the network device based on a source media access control MAC address, a virtual local area network VLAN identifier, and an access interface of the service packet, the user sending the service packet; and
determining, by the network device based on the application feature information in the service packet, the target function that is of the application and that is subscribed to by the user.

12. The method according to claim 11, wherein the target function comprises one or more of the following functions:
application acceleration, game equipment upgrade, or automatic renewal.

13. The method according to any one of claims 1 to 12, wherein the execution action comprises at least one of the following actions: access management, forwarding, QoS guarantee, authentication, authorization, or accounting.

14. The method according to any one of claims 1 to 13, wherein the method further comprises:
receiving, by the network device, path information of a forwarding path, wherein the path information of the forwarding path comprises an Internet Protocol IP address and a segment identifier list; and
when the network device determines that a destination IP address of the service packet matches the IP address comprised in the path information of the forwarding path, adding the segment identifier list to the service packet, and forwarding the service packet based on the segment identifier list.

15. A service processing method, comprising:
generating, by a management server, corresponding application feature information for an application, wherein the application feature information comprises an identifier of the application and an allocated service level, and the allocated service level meets a service level requirement of the application; and
generating, by the management server, a control policy based on the application feature information, wherein the control policy comprises a correspondence between the application feature information and an execution action.

16. The method according to claim 15, wherein the method further comprises:
sending, by the management server, the application feature information to a service server corresponding to the application.

17. The method according to claim 15 or 16, wherein before the generating, by a management server, corresponding application feature information for an application, the method further comprises:
receiving, by the management server, a request packet sent by the service server, wherein the request packet comprises the identifier and the service level requirement of the application; and
allocating, by the management server, a service level that meets the service level requirement to the application corresponding to the identifier of the application.

18. The method according to claim 15 or 16, wherein before the generating, by a management server, corresponding application feature information for an application, the method further comprises:
receiving, by the management server, a request packet sent by the service server, wherein the request packet comprises the identifier of the application and a specified service level; and
allocating, by the management server, the specified service level to the application corresponding to the identifier of the application.

19. The method according to any one of claims 15 to 18, wherein the application feature information further comprises an identifier of a user to which the application belongs and/or a flow identifier of the application.

20. The method according to any one of claims 15 to 19, wherein the method further comprises:
sending, by the management server, the control policy to a network device.

21. The method according to claim 20, wherein the management server is an authentication, authorization, and accounting AAA server, and the sending, by the management server, the control policy to a network device comprises:
sending, by the AAA server, the control policy to a broadband network gateway BNG.

22. The method according to claim 21, wherein the control policy is carried in a remote authentication dial-in user service RADIUS packet sent by the AAA server.

23. The method according to claim 20, wherein the management server is a session management function SMF entity, and the sending, by the management server, the control policy to a network device comprises:
sending, by the SMF entity, the control policy to a user plane function UPF entity.

24. The method according to any one of claims 15 to 23, wherein the execution action comprises at least one of the following actions: access management, forwarding, QoS guarantee, authentication, authorization, or accounting.

25. A service processing method, comprising:
sending, by a service server, a request packet to a management server, wherein the request packet comprises an identifier and a service level requirement of an application; and
receiving, by the service server, application feature information sent by the management server, wherein the application feature information comprises the identifier of the application and an allocated service level, and the allocated service level meets the service level requirement.

26. The method according to claim 25, wherein the service level requirement is a specified service level, and the specified service level is the same as the allocated service level.

27. The method according to claim 25 or 26, wherein the method further comprises:
receiving, by the service server, a registration packet sent by user equipment to which the application belongs.

28. The method according to claim 27, wherein the sending, by a service server, a request packet to a management server comprises:
sending, by the service server, the request packet to the management server in response to receiving the registration packet sent by the user equipment to which the application belongs.

29. The method according to claim 25 or 26, wherein after the receiving, by the service server, application feature information sent by the management server, the method further comprises:
receiving, by the service server, a registration packet sent by user equipment to which the application belongs.

30. The method according to any one of claims 25 to 29, wherein the method further comprises:
sending, by the service server, the application feature information to the user equipment to which the application belongs.

31. The method according to any one of claims 25 to 30, wherein the application feature information further comprises an identifier of a user to which the application belongs and/or a flow identifier of the application.

32. A service processing method, comprising:
sending, by user equipment, a registration packet to a service server, wherein the service server provides a service for an application on the user equipment; and
receiving, by the user equipment, a response packet that is of the registration packet and that is sent by the service server, wherein the response packet carries application feature information, and the application feature information comprises an identifier of the application and an allocated service level.

33. The method according to claim 32, wherein the application feature information further comprises an identifier of a user to which the application belongs and/or a flow identifier of the application.

34. The method according to claim 32 or 33, wherein the method further comprises:
sending, by the user equipment, a service packet to a network device, wherein the service packet carries the application feature information, and the service packet belongs to the application.

35. A service processing method, comprising:
obtaining, by a controller, application feature information of an application, wherein the application feature information comprises an identifier and a service level of the application;
determining, by the controller based on the application feature information, a forwarding path corresponding to the application; and
sending, by the controller, a correspondence between the application feature information and path information of the forwarding path to an ingress node of the forwarding path.

36. The method according to claim 35, wherein the method further comprises:
determining, by the controller, at least one candidate path based on location information of an area served by the application or an IP address of user equipment to which the application belongs; and
the determining, by the controller based on the application feature information, a forwarding path corresponding to the application comprises:
determining, by the controller, the forwarding path in the at least one candidate path based on the application feature information, wherein the forwarding path meets the allocated service level in the application feature information.

37. The method according to claim 35 or 36, wherein the application feature information further comprises an identifier of a user to which the application belongs and/or a flow identifier of the application.

38. The method according to any one of claims 35 to 37, wherein the sending, by the controller, a correspondence between the application feature information and path information of the forwarding path to an ingress node of the forwarding path comprises:
sending, by the controller, the correspondence to the ingress node of the forwarding path by using a YANG model packet; or
sending, by the controller, the correspondence to the ingress node of the forwarding path by using a border gateway protocol BGP packet or a path computation element protocol PCEP packet.

39. The method according to any one of claims 35 to 38, wherein the determining, by the controller based on the application feature information, a forwarding path corresponding to the application comprises:
determining, by the controller based on the application feature information, a first forwarding path and a second forwarding path that correspond to the application, wherein directions of the first forwarding path and the second forwarding path are opposite; and
the sending, by the controller, a correspondence between the application feature information and path information of the forwarding path to an ingress node of the forwarding path comprises:
sending, by the controller, a correspondence between the application feature information and first path information of the first forwarding path to an ingress node of the first forwarding path.

40. The method according to any one of claims 35 to 39, wherein a type of the forwarding path comprises at least one of the following:
a segment routing-internet protocol version 6 SRv6 tunnel, a segment routing-multi-protocol label switching SR-MPLS tunnel, a deterministic latency path, or a service chain.

41. The method according to any one of claims 35 to 40, wherein the obtaining, by a controller, application feature information of an application comprises:
receiving, by the controller, the application feature information from a management server or a service server; or
determining, by the controller, the application feature information in response to a request of a service server.

42. The method according to any one of claims 35 to 41, wherein the determining, by the controller based on the application feature information, a forwarding path corresponding to the application comprises:
determining, by the controller based on the allocated service level, the forwarding path corresponding to the application.

43. A service processing system, comprising a management server, a service server, and a network device, wherein
the service server is configured to send a request packet to a management server, wherein the request packet comprises an identifier and a service level requirement of an application;
the management server is configured to: receive the request packet sent by the service server, allocate a service level that meets the service level requirement to the application corresponding to the identifier of the application, generate application feature information, and send the application feature information to the service server, wherein the application feature information comprises the identifier of the application and the allocated service level;
the service server is further configured to send the application feature information to user equipment;
the management server is further configured to: generate a control policy based on the application feature information, and send the control policy to the network device, wherein the control policy comprises a correspondence between the application feature information and an execution action; and
the network device is configured to: receive the control policy sent by the management server, receive a service packet sent by the user equipment, and process the service packet based on the execution action in the control policy, wherein the service packet comprises the application feature information.

44. The system according to claim 43, wherein a service level corresponding to the service level requirement is the same as the allocated service level.

45. The system according to claim 43 or 44, wherein the request packet comprises location information; and
the management server is further configured to: establish, based on the location information, a forwarding path from a service area corresponding to the location information to the service server, wherein the forwarding path meets a requirement of the allocated service level; and send a forwarding policy to an ingress node of the forwarding path, wherein the forwarding policy comprises path information corresponding to the forwarding path.

46. The system according to any one of claims 43 to 45, wherein the service server is further configured to send the request packet to the management server after receiving a registration packet sent by a user.

47. The system according to claim 46, wherein the registration packet comprises an IP address of the user equipment, and the request packet comprises the IP address of the user equipment; and
the management server is further configured to establish, based on the IP address of the user equipment, a forwarding path from the network device accessed by the user equipment to the service server, wherein the forwarding path meets the requirement of the allocated service level.

48. A network device, comprising a processor and a memory, wherein the memory is configured to store a computer program or instructions, and the processor is configured to invoke the computer program or the instructions stored in the memory, to enable the network device to perform the method according to any one of claims 1 to 14.

49. A management server, comprising a processor and a memory, wherein the memory is configured to store a computer program or instructions, and the processor is configured to invoke the computer program or the instructions stored in the memory, to enable the management server to perform the method according to any one of claims 15 to 24.

50. A service server, comprising a processor and a memory, wherein the memory is configured to store a computer program or instructions, and the processor is configured to invoke the computer program or the instructions stored in the memory, to enable the service server to perform the method according to any one of claims 25 to 31.

51. User equipment, comprising a processor and a memory, wherein the memory is configured to store a computer program or instructions, and the processor is configured to invoke the computer program or the instructions stored in the memory, to enable the user equipment to perform the method according to any one of claims 32 to 34.

52. A controller, comprising a processor and a memory, wherein the memory is configured to store a computer program or instructions, and the processor is configured to invoke the computer program or the instructions stored in the memory, to enable the controller to perform the method according to any one of claims 35 to 42.

53. A computer-readable storage medium, comprising instructions, wherein when the instructions are run on a computer, the computer is enabled to perform the method according to any one of claims 1 to 42.
